(19) Europäisches Patentamt
European Patent Office
Office européen des brevets

(11) **EP 4 759 452 A1**

(12) **EUROPEAN PATENT APPLICATION**
published in accordance with Art. 153(4) EPC

(43) Date of publication:
**17.06.2026 Bulletin 2026/25**

(21) Application number: **24851879.7**

(22) Date of filing: **07.08.2024**

(51) International Patent Classification (IPC):
**B09B 3/35** (2022.01)  **B01J 20/26** (2006.01)
**B07B 7/08** (2006.01)  **B07B 9/00** (2006.01)
**C08J 3/12** (2006.01)

(52) Cooperative Patent Classification (CPC):
**B01J 20/26; B07B 7/08; B07B 9/00; B09B 3/35;
C08J 3/12; Y02W 30/62**

(86) International application number:
**PCT/JP2024/028241**

(87) International publication number:
**WO 2025/033458 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.08.2023 JP 2023129711**

(71) Applicant: **Nippon Shokubai Co., Ltd.
Osaka-shi, Osaka 541-0043 (JP)**

(72) Inventors:
• **NOGI, Kozo
Himeji-shi, Hyogo 671-1282 (JP)**

• **KOBAYASHI, Nobuhiro
Himeji-shi, Hyogo 671-1282 (JP)**
• **TORII, Kazushi
Himeji-shi, Hyogo 671-1282 (JP)**
• **MATSUI, Daisuke
Himeji-shi, Hyogo 671-1282 (JP)**
• **ENOKIDA, Yusuke
Himeji-shi, Hyogo 671-1282 (JP)**
• **FUJINO, Shinichi
Himeji-shi, Hyogo 671-1282 (JP)**
• **ISHIZAKI, Kunihiko
Himeji-shi, Hyogo 671-1282 (JP)**

(74) Representative: **Schön, Christoph
Dr. Schön, Neymeyr & Partner mbB
Bavariaring 26
80336 München (DE)**

(54) **METHOD FOR RECOVERING WATER-ABSORBING RESIN**

(57)    Provided is a technique capable of obtaining a water-absorbent resin in which the amount of contaminants mixed is further reduced when the water-absorbent resin is recovered from a mixture in which the water-absorbent resin and the contaminants such as pulp are fixed. A method for recovering a water-absorbent resin of the present invention includes, in the following order, a crushing step of crushing a mixture in which a water-absorbent resin and a contaminant are fixed and integrated, by applying a physical force to the mixture, and a separation step of separating the water-absorbent resin and the contaminant from the mixture crushed in the crushing step.

FIG. 1

## Description

Technical Field

The present invention relates to a method for recovering a water-absorbent resin.

Background Art

Articles (hereinafter also referred to as "absorbent articles") intended to absorb body fluids, such as disposable diapers, sanitary napkins, and incontinence pads, are mainly formed of a water-absorbent material such as pulp and a water-absorbent resin (super absorbent polymer, hereinafter also referred to as "SAP"), and an outer material formed of a nonwoven fabric, a resin film, resin-processed paper, and the like. In recent years, from the viewpoint of effective utilization of resources, it has been studied to separate and recover the components of the absorbent article, particularly pulp and the water-absorbent resin, and reuse the components without using incineration treatment for the used absorbent article.

For example, JP 2019-85447 A proposes a method for recovering pulp from a used absorbent article by subjecting an inactivation aqueous solution containing pulp and a water-absorbent resin separated from the used absorbent article to solid-liquid separation and then treating the inactivation aqueous solution by a specific method. Further, JP 2021-41310 A (corresponding to EP 4001354 A, the same applies hereinafter) proposes a method for producing a regenerated superabsorbent polymer by inactivating a used superabsorbent polymer derived from a used sanitary article with an acidic solution and then subjecting the polymer to a specific treatment.

Summary of Invention

According to the method disclosed in JP 2019-85447 A, the water-absorbent resin is removed from the pulp, which is separated from the used absorbent article and in which the water-absorbent resin remains, and the water-absorbent resin and the pulp are thus separated. Further, JP 2021-41310 A describes that a foreign substance (pulp and the like) can be separated from the regenerated superabsorbent polymer by performing a foreign substance separation step of separating the foreign substance such as pulp from the regenerated superabsorbent polymer after the drying step.

However, when used absorbent articles are recycled in a wet manner as in the techniques described in JP 2019-85447 A and JP 2021-41310 A, for example, even after the step of separating the water-absorbent resin and fibrous substances such as pulp, the water-absorbent resin is mixed with contaminants such as pulp in a fixed state, and it is difficult to separate these with high purity. In addition, there are cases where the absorbent article has to be discarded due to moisture absorption during storage of the absorbent article. Even when the water-absorbent resin and the fibrous substance such as pulp are taken out from such an absorbent article, the contaminants such as pulp are fixed to the water-absorbent resin, and it is difficult to separate these with high purity. Therefore, when an absorbent article is produced using the water-absorbent resin separated and recovered as described above (material recycling), unfortunately, the physical properties of the absorbent article are deteriorated due to the contaminants such as pulp that have not been removed. In addition, when the separated and recovered water-absorbent resin is chemically decomposed to newly produce a water-absorbent resin (chemical recycling), unfortunately, the performance of the resulting water-absorbent resin is deteriorated due to the remaining contaminants, and the workability at the time of production is deteriorated.

Therefore, there is a demand for a technique capable of recovering a water-absorbent resin having a lower content of contaminants from a mixture in which the water-absorbent resin and the contaminants such as pulp are fixed.

Accordingly, an object of the present invention is to provide a technique capable of obtaining a water-absorbent resin in which the amount of contaminants mixed is further reduced when the water-absorbent resin is recovered from a mixture in which the water-absorbent resin and the contaminants such as pulp are fixed and integrated.

The present inventors have intensively studied to solve the above issues. As a result, the present inventors have found that the above issues can be solved by applying a physical force to a mixture in which a water-absorbent resin and a contaminant are fixed and integrated, crushing the water-absorbent resin and the contaminant to release the integrated state, and then separating the water-absorbent resin and the contaminant, and thus the present invention has been completed.

That is, one aspect for achieving the object is a method for recovering a water-absorbent resin, the method including, in the following order, a crushing step of crushing a mixture in which a water-absorbent resin and a contaminant are fixed and integrated, by applying a physical force to the mixture, and a separation step of separating the water-absorbent resin and the contaminant from the mixture crushed in the crushing step.

Brief Description of Drawings

FIG. 1 is a flow chart for explaining a method for recovering a water-absorbent resin according to the present invention. In FIG. 1, S1 represents a fracturing step, S2 represents an inactivation/dehydration treatment step, S3 represents a washing/disinfection step, S4 represents a fractionation/filtration step, S5 represents an acid treatment step, S6 represents a neutralization step, S7 represents a drying step, S100 represents a preparation step of a regenerated water-absorbent resin (pre-treatment step), S200 represents a crushing step, and S300 represents a separation step.

FIG. 2 is a photograph showing the appearance of a dried water-absorbent resin (S1) (mixture) containing pulp obtained in Production Example 1.

FIG. 3 is an SEM image of an 850 $\mu$m/500 $\mu$m particle portion of a pulverized product (1-1) obtained in Example 1-1 (magnification: 30 times).

FIG. 4 is an SEM image of a 500 $\mu$m/150 $\mu$m particle portion of the pulverized product (1-1) produced in Example 1-1 (magnification: 30 times).

FIG. 5 is an SEM image of a 150 $\mu$m passing particle portion of the pulverized product (1-1) obtained in Example 1-1 (magnification: 30 times).

Description of Embodiments

In a method for recovering a water-absorbent resin according to one aspect of the present invention, a crushing step of crushing a mixture in which a water-absorbent resin and a contaminant are fixed and integrated, by applying a physical force to the mixture (a water-absorbent resin and a contaminant), and a separation step of separating the water-absorbent resin and the contaminant from the mixture crushed in the crushing step, are performed in this order. It should be noted that, in the present specification, the method for recovering a water-absorbent resin having such a configuration is also simply referred to as the "recovery method according to the present invention" or the "method according to the present invention ". In addition, the "water-absorbent resin recovered by the method of the present invention" used herein is also simply referred to as the "water-absorbent resin according to the present invention".

In an absorbent article such as a disposable diaper, a water-absorbent resin and pulp are usually used as a water-absorbent material. In order to separate these, as in the techniques of JP 2019-85447 A and JP 2021-41310 A, the water-absorbent resin is treated with an aqueous solution for inactivating the water-absorbent resin (inactivation aqueous solution), and then the water-absorbent resin and fibrous substances such as pulp are separated. Thereafter, the separated water-absorbent resin is further subjected to several treatments and then dried to obtain a regenerated water-absorbent resin. However, even the regenerated water-absorbent resin obtained by such a method has a disadvantage that a relatively large amount of contaminants such as pulp are fixed to the inside or the surface thereof.

The present inventors have therefore studied the issue and have considered that the separation of the water-absorbent resin from the contaminants such as pulp becomes insufficient due to the following reasons. That is, the present inventors have presumed that this is because, when drying is performed in a state where the water-absorbent resin in a water-containing state and the contaminants such as pulp are mixed, the water-absorbent resin and the contaminants such as pulp are firmly fixed and integrated. Specifically, when wet recycling is performed and then drying treatment is performed as in the treatment using the inactivation aqueous solution as described above, the remaining contaminants such as pulp are likely to be firmly fixed and integrated with the water-absorbent resin due to the stickiness (tackiness) of the water-absorbent resin that is exhibited when the water-absorbent resin is in a swollen state by containing water and the water-soluble portion in a free state. It is also presumed that even when the water-absorbent resin in a dry state and the contaminants such as pulp are present independently, the same phenomenon as described above may occur due to moisture absorption from the external environment. In other words, not only the water-absorbent material (water-absorbent resin and pulp) subjected to wet recycling as described above, but also the water-absorbent resin contained in an unused absorbent article that has absorbed moisture (due to the external environment) after production can be integrated as described above (the water-absorbent resin and the contaminants such as pulp can be firmly fixed to each other).

In contrast, according to the recovery method of the present invention, a physical force is applied to a mixture in which a water-absorbent resin and a contaminant such as pulp are fixed and integrated, and thereby the water-absorbent resin and the contaminant such as pulp contained in the mixture are crushed. By performing the crushing step before the separation step, the water-absorbent resin and the contaminants such as pulp can be made independent of each other (not fixed to each other), and therefore, the water-absorbent resin and the contaminants such as pulp can be efficiently separated from each other in the separation step. As a result, it is presumed that a water-absorbent resin in which the amount of contaminants such as pulp mixed is further reduced can be obtained.

It should be noted that the mechanism described above is a surmise and does not limit the technical scope of the present invention.

Hereinafter, preferred embodiments of the present invention will be described. It should be noted that the present invention is not only limited to the following embodiments and can be variously modified within the scope of the claims. The embodiments described herein can be combined in any way to constitute another embodiment.

Throughout the present specification, it is to be understood that the expression of a singular form also includes a concept of a plural form thereof, unless otherwise specified. Therefore, it is to be understood that an article for a singular form (for example, "a", "an", and "the" in the case of English) includes a concept of a plural form thereof, unless otherwise stated. Also, it is to be understood that the terms used herein are used in their ordinary meanings in the art, unless otherwise specified. Accordingly, unless defined otherwise, all technical terms and scientific terms used herein have the same meanings as commonly understood by those skilled in the art to which the present invention belongs. In case of conflict, the present specification (including definitions) is prior.

In the present specification, the term "(meth)acrylic" encompasses both acrylic and methacrylic. Thus, for example, the term "(meth)acrylic acid" encompasses both acrylic acid and methacrylic acid. In the present specification, the term "acid (salt)" means "an acid and/or a salt thereof". In addition, a concentration and % represent a mass concentration and mass%, respectively, unless otherwise specified, and a ratio is a mass ratio unless otherwise specified. Unless otherwise specified, operations and measurements of physical properties and the like are performed under conditions of room temperature (20 to 25°C)/relative humidity of 40 to 55% RH. Also, "A and/or B" is intended to include each of A, B, and a combination thereof.

[1] Definition of Terms

[1-1] Water-Absorbent Resin

The "water-absorbent resin" is a water-swellable water-insoluble polymer gelling agent, and without any limitations, refers to a common water-absorbent resin having a water absorption capacity of 10 times or more and 1000 times or less. More specifically, the water-absorbent resin before absorbing a liquid to be absorbed preferably satisfies, as the "water swellability", a physical property in which CRC defined by ERT441.2-02 is 5 g/g or more. The definition of CRC will be described later.

In the present technical field, the water-absorbent resin may mean each particle of the water-absorbent resin, but in the present specification, unless otherwise specified, the water-absorbent resin means an aggregate of the entire particles of the water-absorbent resin.

The water-absorbent resin may be a polymer derived from a carboxy group-containing unsaturated monomer. The water-absorbent resin may contain a polymer having a partially neutralized carboxy group. Specific examples of the water-absorbent resin include a polyacrylic acid (salt)-based resin, a polysulfonic acid (salt)-based resin, a maleic anhydride (salt)-based resin, a polyacrylamide-based resin, a polyvinyl alcohol-based resin, a polyethylene oxide-based resin, a polyaspartic acid (salt)-based resin, a polyglutamic acid (salt)-based resin, a polyalginic acid (salt)-based resin, a starch-based resin, a cellulose-based resin, a (meth)acrylate cross-linked polymer, a saponified cross-linked product of a (meth)acrylate-vinyl acetate copolymer, a starch-acrylate graft polymer, and a cross-linked product thereof.

In one embodiment of the present invention, the water-absorbent resin may be a polymer derived from a carboxy group-containing unsaturated monomer and may include a polymer having a partially neutralized carboxy group. In addition, in one embodiment of the present invention, the water-absorbent resin is a polyacrylic acid (salt)-based resin.

[1-2] Recovered Water-Absorbent Resin

The "recovered water-absorbent resin" means a water-absorbent resin that is originally discarded. Specifically, there is a water-absorbent resin contained in a used absorbent article (for example, a water-absorbent resin that has absorbed body fluids such as excrement and blood in a used absorbent article), and a water-absorbent resin contained in a pre-use waste absorbent article (for example, a water-absorbent resin that has absorbed moisture during storage or has been discarded even if it has not absorbed body fluids such as excrement and blood).

When the recovered water-absorbent resin is a water-absorbent resin according to an aspect in which the recovered water-absorbent resin is contained in a used absorbent article, the recovered water-absorbent resin may be in a state of a hydrogel in which water such as urine water is incorporated. Thus, the water-absorbent resin may contain a water-absorbent resin in a state of a hydrogel.

The recovered water-absorbent resin is generally recovered by removing the component members other than the water-absorbent resin, such as an outer material, from the absorbent article. In this case, examples of the operation of separating the recovered water-absorbent resin from the absorbent article include a dry separation method and a wet separation method, and as each of these methods, a known technique can be used.

It should be noted that, in the present specification, the mass of the water-absorbent resin and the recovered water-absorbent resin is a value in terms of solid content unless otherwise specified. For example, when the mass of the recovered water-absorbent resin contained in a used disposable diaper is unknown, the mass of the water-absorbent resin is calculated using the mass of the water-absorbent resin contained in a new (unused) disposable diaper and a general value of the water absorption capacity of the water-absorbent resin in the used disposable diaper, or assuming that the content (in terms of solid content) of the water-absorbent resin based on the total mass of the new (unused) disposable diaper is 30 mass%.

[1-3] Absorbent Article

The "absorbent article" refers to a sanitary material used to absorb bodily fluids such as excrement and blood. Examples of the sanitary material include disposable diapers (for children and adults), sanitary napkins, adult incontinence products (incontinence pads), and breast pads. Examples of articles similar to the sanitary materials include pet sheets and pet diapers, and in the present invention, these articles for treating animal excrement are also included in the sanitary materials.

An example of the structure of the absorbent article includes a structure including a liquid-permeable surface sheet (surface material), an absorbent body containing a water-absorbent resin and a fibrous substance, and a liquid-impermeable back sheet (waterproof material). The absorbent body is suitably produced by mixing a water-absorbent resin and a fibrous substance, or sandwiching a water-absorbent resin with a fibrous substance and molding the resulting material into a film shape, a cylindrical shape, a sheet shape, or the like. Examples of the fibrous substance include hydrophilic fibers such as pulverized wood pulp, cotton linters, crosslinked cellulose fibers, cotton, wool, and fibers such as rayon, acetate, and vinylon. It should be noted that, in the present specification, these fibrous substances are also collectively referred to as "pulp".

More specifically, examples of the configuration of a disposable diaper as one of the absorbent articles include a disposable diaper having a surface material such as a nonwoven fabric made of chemical fibers such as polypropylene or polyester; a water-absorbent body containing a water-absorbent material such as a water-absorbent resin or pulp; a waterproof material such as a resin film such as a polyethylene film, or paper and nonwoven fabric (resin-treated paper or resin-treated nonwoven fabric) subjected to a processing treatment with a resin such as polyethylene laminated paper or polyethylene laminated nonwoven fabric; and an adhesive (binder) for bonding these members.

It should be noted that, in the present specification, among the components of the absorbent article, the components other than the water-absorbent material (water-absorbent resin and pulp), in other words, the surface sheet (surface material) and the back sheet (waterproof material) formed of a nonwoven fabric, a resin film, resin-treated paper, a resin-treated nonwoven fabric, and the like, and the adhesive (binder) are also collectively referred to as "outer material".

The "absorbent article" encompasses both used absorbent articles and unused absorbent articles (particularly, pre-use waste absorbent articles).

[1-4] Used Absorbent Article

The "used absorbent article" refers to a used sanitary material that has been used by a consumer and has absorbed body fluids such as excrement and blood. In other words, the used absorbent article includes the water-absorbent resin swollen with body fluids.

Here, the state of use is not particularly limited. Examples thereof include a state where solid waste (feces or the like) is adhered, a state where liquid waste (urine, menstrual blood, or the like) is adhered, or a state where both of them are adhered, and in view of the cost and treatment efficiency of the regeneration treatment, a state where the urine is absorbed as the main component is preferable.

Examples of the used absorbent article used in the present invention include those collected and recovered from and transported from facilities where a user using the absorbent article resides or stays, such as general households, hospitals, and welfare facilities.

[1-5] Contaminants

As described above, the absorbent article mainly includes the water-absorbent material containing the water-absorbent resin and the pulp, and the outer material other than the water-absorbent material. In order to recover the water-absorbent resin swollen by use or the like, the following treatment is then generally performed. Specifically, the outer material of the absorbent article is fractured to coarsely fracture the outer material and the water-absorbent material (fracturing step), and then, after appropriate treatment, the outer material is fractionated (filtered) into the water-absorbent resin, the pulp, and the fine outer material that has not been separated (fractionation/filtration step). However, even after such treatment, the fine fractured material of the outer material, which is mixed through fracturing of the pulp and the outer material, and the water-absorbent resin cannot be completely separated, resulting in a mixed state. Therefore, in the present specification, in addition to the pulp used as the water-absorbent material, the fractured material (fine fractured material) of the outer material as described above is collectively referred to as "contaminants". Consequently, in one embodiment of the present invention, the contaminants separated from the water-absorbent resin include the outer material of the absorbent article and the pulp. In one embodiment of the present invention, the contaminants separated from the water-absorbent resin include pulp.

The shape of the contaminants is not particularly limited; examples thereof include a fibrous shape (including a straight shape, a wave shape, and the like), a rod shape, a needle shape, a flat plate shape, a strip shape, and an irregular flake shape, and in general, most of the contaminants mixed in the water-absorbent resin are fibrous.

[1-6] Mixture

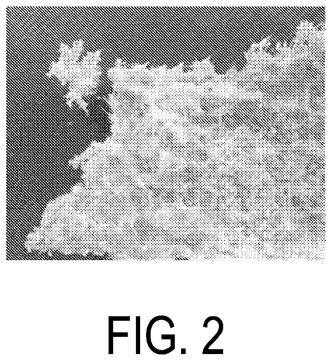

The "mixture" to be subjected to the method for recovering a water-absorbent resin according to the present invention (more specifically, the crushing step according to the present invention) is formed by the water-absorbent resin and the contaminants being fixed and integrated. In the present specification, the "mixture in which the water-absorbent resin and the contaminants are fixed and integrated" may also be simply referred to as the "integrated mixture according to the present invention" or the "mixture". In one embodiment, the mixture to be subjected to the recovery method according to the present invention is in a state where the contaminants such as pulp are incorporated into a water-absorbent resin aggregate and integrated (for example, the state shown in the photograph of FIG. 2). Such a state of the mixture is formed by firmly fixing the pulp or the like to the water-absorbent resin when the water-absorbent resin, the pulp, and the like in a water-containing state (including a moisture-absorbed state) are dried.

Here, the specific form (microstructure) of the mixture is not particularly limited, and examples thereof include a form in which a contaminant such as pulp adheres to the surface of the particles (irregularly shaped particles) of the water-absorbent resin; a form in which the particles (irregularly shaped particles) of the water-absorbent resin are aggregated to form an aggregate and the contaminant such as pulp enters between the particles; and a form in which the contaminant such as pulp penetrates the particles (irregularly shaped particles) of the water-absorbent resin.

In addition, the state in which "the water-absorbent resin and the contaminants are fixed" refers to, for example, a state in which the water-absorbent resin and the contaminants cannot be separated by a general classification apparatus such as a sieve classifier, an inertial classifier, a centrifugal classifier, or a gravity classifier.

As described above, the mixture to be subjected to the method for recovering a water-absorbent resin according to the present invention (more specifically, the crushing step according to the present invention) includes the contaminants such as pulp and the water-absorbent resin which are firmly fixed and integrated, and therefore, even when the mixture is subjected to a separation treatment using a usual separation means such as a sieve, the contaminants and the water-absorbent resin cannot be easily separated from each other.

However, according to the recovery method of the present invention, the separation step is performed after the contaminants such as pulp and the water-absorbent resin are made independent of each other by the crushing step described in detail later, and therefore the content of the contaminants mixed in the water-absorbent resin can be reduced.

It should be noted that, in the mixture obtained through the crushing step described in detail later, the water-absorbent resin and the contaminants may not be completely independent of each other, and the water-absorbent resin and the contaminants may partially remain as an integrated mixture. Therefore, the "mixture after the crushing" obtained through the crushing step may contain the water-absorbent resin and the contaminants in a state of being independent of each other, and the mixture remained in an integrated state without being completely crushed.

From the viewpoint of environmental protection and the like, in the present invention, the water-absorbent resin contained in the mixture preferably contains a recovered water-absorbent resin. In other words, in one embodiment of the present invention, the water-absorbent resin contained in the mixture contains a recovered water-absorbent resin. It should be noted that, in this embodiment, the mixture may further contain a fresh (unused) water-absorbent resin that is newly produced. In another embodiment of the present invention, the water-absorbent resin contained in the mixture is a recovered water-absorbent resin.

From a viewpoint similar to those described above, the recovered water-absorbent resin contained in the mixture preferably contains a water-absorbent resin recovered (taken out and collected) from a used absorbent article. In other words, in one embodiment of the present invention, the mixture contains a recovered water-absorbent resin, and the recovered water-absorbent resin contains a water-absorbent resin recovered (taken out and collected) from a used absorbent article.

In addition, in one embodiment of the present invention, the moisture cannot be completely removed from the mixture to be subjected to the crushing step. Therefore, a water-absorbent resin contained in the mixture (a recovered water-absorbent resin) can be in a state of a hydrogel in which water is incorporated internally. Thus, the water-absorbent resin contained in the mixture may contain a water-absorbent resin in a hydrogel state.

In one embodiment of the present invention, the CRC of the water-absorbent resins (recovered water-absorbent resins) contained in the mixture is 20 g/g or more, 25 g/g or more, 27 g/g or more, or 30 g/g or more. In one embodiment of the present invention, the CRC of the water-absorbent resins (recovered water-absorbent resins) is 70 g/g or less, 60 g/g or less, or 50 g/g or less. The definition of the CRC will be described later.

[1-7] Regenerated Water-Absorbent Resin (Regenerated SAP)

As described above, the recovered water-absorbent resin is generally recovered from the absorbent article by a dry separation method or a wet separation method. In this case, the recovery of the water-absorbent resin swollen by containing water due to use or the like (the water-absorbent resin contained in the used absorbent article or the water-absorbent resin contained in the pre-use waste absorbent article) is performed by removing the component members other than the water-absorbent resin (the outer material forming the absorbent article, and the like), and the removal and separation of the component members other than the water-absorbent resin can be performed by using a known wet separation method.

As an example, the recovery of the water-absorbent resin by wet separation is performed through the following steps: an inactivation/dehydration treatment step in which the water-absorbent material containing the water-absorbent resin and the contaminants such as pulp and the outer material that have been recovered from the absorbent article are dispersed in a solution (i.e., in a wet manner), and the water-absorbent resin contained in the absorbent article is subjected to a shrinking/dehydration treatment (inactivation treatment); a fractionation/filtration step in which the absorbent article is fractioned (filtered) into the water-absorbent resin, the pulp, and the outer material; and a drying step in which the recovered water-absorbent resin is dried, thereby the water-absorbent resin is recovered.

In the present specification, at least the water-absorbent resin recovered by performing the wet separation as described above is referred to as "regenerated water-absorbent resin". In other words, in one embodiment, the recovered water-absorbent resin may contain a regenerated water-absorbent resin. In another embodiment, the recovered water-absorbent resin is a regenerated water-absorbent resin. Therefore, in one embodiment, the water-absorbent resin contained in the mixture is a recovered water-absorbent resin, and the recovered water-absorbent resin contains a regenerated water-absorbent resin. In another embodiment, the water-absorbent resin contained in the mixture is a recovered water-absorbent resin, and the recovered water-absorbent resin is a regenerated water-absorbent resin (i.e., the water-absorbent resin contained in the mixture is a regenerated water-absorbent resin).

In addition, in the present specification, the steps of obtaining (preparing) a regenerated water-absorbent resin as described above are collectively referred to as a "preparation step of a regenerated water-absorbent resin" or a "pre-treatment step".

In the recovery of the regenerated water-absorbent resin as described above, a fracturing step of fracturing the outer material and the like of the absorbent article; a washing/disinfection step of washing and/or disinfecting the water-absorbent resin (water-absorbent material containing the water-absorbent resin); an acid treatment step of subjecting the water-absorbent resin to an acid treatment; a neutralization step of subjecting the residual acid to a neutralization reaction after the acid treatment step; and the like may be further performed as necessary.

Even after the fractionation/filtration step as described above, contaminants such as pulp are fixed to a part of the water-absorbent resin to be recovered (regenerated water-absorbent resin). Therefore, in one embodiment, the mixture in the present invention may be a mixture in which the regenerated water-absorbent resin and the contaminants are fixed and integrated.

[1-8] EDANA and WSP

"EDANA" is an abbreviation for European Disposables and Nonwovens Association, and "WSP" is an abbreviation for World Strategic Partners. EDANA WSP is a European and American standard (almost global standard) relating to a method for measuring physical properties of a water-absorbent resin. In the present invention, unless otherwise specified, the physical properties of the water-absorbent resin are measured in accordance with EDANA WSP original (revised in 2010/known literature).

[1-8-1] CRC

In the present specification, the water absorption capacity without load (CRC) is a value measured according to the following method.

(Water Absorption Capacity without Load (CRC))

"CRC" is an abbreviation for "Centrifuge Retention Capacity", and the CRC of the water-absorbent resin indicates a water absorption capacity (in g/g) of the water-absorbent resin to a 0.90 mass% aqueous sodium chloride solution under no pressure for 30 minutes.

0.200 g of a water-absorbent resin is uniformly placed in a bag (85 mm × 60 mm) made of a nonwoven fabric (product name: HEATLON PAPER, model: GSP-22, manufactured by Nangoku Pulp Industry Co., Ltd.), heat-sealed, and then immersed in a large excess (usually about 500 mL) of 0.90 mass% aqueous sodium chloride solution at room temperature. After 30 minutes, the bag is pulled up, and draining is performed for 3 minutes with the centrifugal force (250 G) described in ERT441.2-02 using a centrifuge (centrifuge model H-122, manufactured by KOKUSAN Co., Ltd.), and then the mass W1 (g) of the bag is measured. In addition, the same operation is performed without using the water-absorbent resin, and the mass WO (g) at that time is measured.

From these masses W1 and WO, the centrifuge retention capacity (CRC) is calculated according to Equation (1) below.

[Math. 1]

$$\text{Equation (1):}$$
$$\text{CRC (g/g)} = (\text{W1} - \text{W0})/(\text{mass of water-absorbent resin}) - 1$$

[1-8-2] Water-Soluble Content (16-Hour Value) of Water-Absorbent Resin and Mixture

In the present specification, the water-soluble content (16-hour value) is a value measured according to the following method. In the present specification, the "water-soluble content (16-hour value)" is also simply referred to as "water-soluble content", "water-soluble portion", or "soluble polymer content".

(Measurement of Water-Soluble Content (16-Hour Value))

200.0 g of a 0.90 mass% aqueous sodium chloride solution is weighed out into a glass vessel of 250 mL volume with a lid, in which a cylindrical rotator having a length of 35 mm and a cross-sectional diameter of 7.5 mm is placed, and then 1.00 g of a water-absorbent resin or mixture is added to the aqueous solution, and the vessel is covered with a plastic wrap. Thereafter, the solution is stirred at room temperature (25°C) for 16 hours using the cylindrical rotator (rotation speed of 500 rpm) to extract water-soluble components in the water-absorbent resin or the mixture. After completion of stirring, the extraction liquid is filtered using a sheet of filter paper (ADVANTEC TOYO KAISHA, LTD., product name: (JIS P 3801, No. 2), thickness of 0.26 mm, retention particle size of 5 $\mu$m), and 50.0 g of the resulting filtrate is used as a measurement liquid.

Next, the measurement liquid is titrated with 0.1 N NaOH aqueous solution until pH 10 is reached, and then titrated with a 0.1 N HCl aqueous solution until pH 2.7 is reached. The titers at this time are determined as [NaOH] mL and [HCl] mL, respectively.

In addition, the same operation is performed using only 200.0 g of a 0.90 mass% aqueous sodium chloride solution without adding the water-absorbent resin or the mixture, and the blank titers ([bNaOH] mL and [bHCl] mL) are determined.

When the water-absorbent resin or the mixture is composed of known amounts of acrylic acid and a salt thereof, the water-soluble content (in mass%) in the water-absorbent resin or the mixture can be calculated by Equation (2) below, based on the average molecular weight of the monomer and the titer obtained by the above operation. It should be noted that, in the case of the recovered water-absorbent resin, the average molecular weight of the monomer is unknown, and the water-soluble content as an index is therefore calculated by using the neutralization ratio calculated by Equation (3) below and the average molecular weight of the monomer calculated by Equation (4) below. It should be noted that, in Equation (4) below, "72" is the molecular weight of acrylic acid, and "94" is the molecular weight of sodium acrylate.

[Math. 2]

$$\text{Equation (2):}$$
$$\text{Water-soluble content (mass\%)}$$
$$= 0.1 \times (\text{average molecular weight of monomer}) \times 200 \times 100 \times ([\text{HCl}] - [\text{bHCl}])/1000/1.0/50.0$$

[Math. 3]

$$\text{Equation (3):}$$
$$\text{Neutralization ratio (mol\%)} = \{1 - ([\text{NaOH}] - [\text{bNaOH}])/([\text{HCl}] - [\text{bHCl}])\} \times 100$$

[Math. 4]

$$\text{Equation (4):}$$
$$\text{Average molecular weight of monomer} = 72 \times \{1 - \text{neutralization ratio (mol\%)}/100\} + 94 \times \text{neutralization ratio (mol\%)}/100$$

[1-8-3] AAP 0.3 (Water Absorption Capacity Under Pressure)

"AAP" is an abbreviation for "absorption against pressure", and the AAP of the water-absorbent resin of the present invention indicates the water absorption capacity under pressure (in g/g) to a 0.90 mass% of aqueous sodium chloride solution. In addition, "AAP 0.3" means AAP at a pressure of 0.3 psi. AAP 0.3 of the water-absorbent resin is measured in accordance with ERT442.2-02. Specifically, 0.9 g of the water-absorbent resin is swollen at a pressure of 2.07 kPa (21 g/cm$^2$, 0.3 psi) for 1 hour using a large excess of 0.9 mass% aqueous sodium chloride solution, and then AAP (water absorption capacity under pressure) was measured. It should be noted that, in the present specification, "AAP 0.3", "water absorption capacity under pressure", and "AAP" are treated as synonyms unless otherwise specified.

[2] Method for Recovering Water-Absorbent Resin According to Embodiment of First Aspect

In one embodiment of the present invention, a method for recovering a water-absorbent resin includes, in the following order, crushing a mixture in which a water-absorbent resin and a contaminant are fixed and integrated, by applying a physical force to the mixture (crushing step), and separating the water-absorbent resin and the contaminant from the crushed mixture (separation step). According to such a recovery method, when the water-absorbent resin is recovered from the mixture in which the water-absorbent resin and the contaminants such as pulp are fixed, it is possible to obtain a water-absorbent resin (a water-absorbent resin derived from the mixture) in which the amount of contaminants mixed is further reduced.

Here, the mixture to be subjected to the crushing step is a mixture in which a recovered water-absorbent resin recovered from the absorbent article (used absorbent article and the unused absorbent article (particularly, a pre-use waste absorbent article)) and the contaminants are fixed and integrated. Specifically, the mixture to be subjected to the crushing step may be a mixture of a recovered water-absorbent resin and a contaminant recovered from an absorbent article by a known method, a mixture of a recovered water-absorbent resin and a contaminant obtained by requesting another company to recover from an absorbent article, or a purchased mixture of such a recovered water-absorbent resin and a contaminant. The method for recovering a water-absorbent resin according to the present invention can further remove the contaminants fixed to the recovered water-absorbent resin separated and recovered by a known method in this manner, thus obtaining a water-absorbent resin in which the amount of the contaminants mixed is further reduced.

In one embodiment, the mixture to be subjected to the recovery method according to the present invention may be a mixture of a regenerated water-absorbent resin and contaminants. Therefore, the recovery method according to the present invention may further include a step of obtaining (preparing) a regenerated water-absorbent resin, in other words, a preparation step of a regenerated water-absorbent resin (pre-treatment step), before the crushing step.

Hereinafter, each step will be described.

[2-1] Preparation Step of Regenerated Water-Absorbent Resin (Pre-treatment Step)

The preparation step of a regenerated water-absorbent resin (pre-treatment step) is a step that is optionally performed. In this step, the water-absorbent resin (recovered water-absorbent resin) and the component members forming the absorbent article other than the water-absorbent resin are separated from the absorbent article to obtain a regenerated water-absorbent resin. In this case, the method for obtaining the regenerated water-absorbent resin from the absorbent article is not particularly limited, and a known method can be adopted as is or with appropriate modification. It should be noted that since contaminants may be fixed to the inside and/or the surface of the regenerated water-absorbent resin obtained through this step, the product obtained through this step may actually be a mixture of the regenerated water-absorbent resin and the contaminants; however, in the following description of this step (pre-treatment step), it may also be simply referred to as "regenerated water-absorbent resin" or "water-absorbent resin".

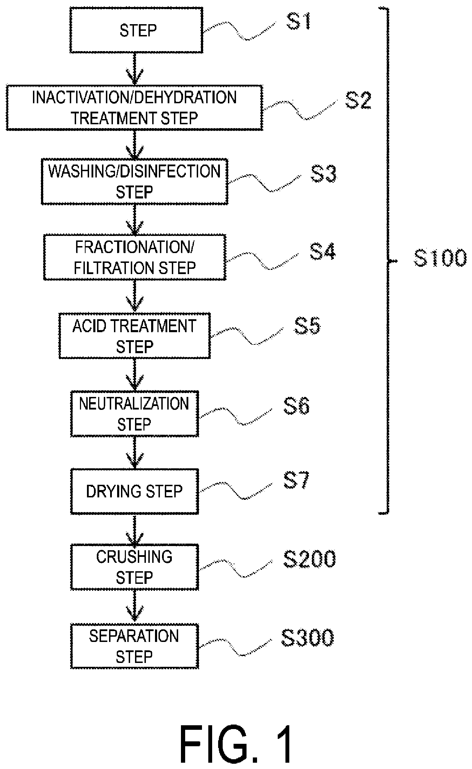

The absorbent article for recovering a regenerated water-absorbent resin may be a used absorbent article, or a pre-use waste absorbent article (for example, an absorbent article which has absorbed moisture during storage of the absorbent article even if it has not absorbed body fluids such as excrement and blood, and has been discarded), or these may be in a mixed state. Hereinafter, an example of the method for preparing a regenerated water-absorbent resin from an absorbent article (used absorbent article and/or pre-use waste absorbent article) will be described with reference to FIG. 1. The method described below is an example of the method for obtaining a regenerated water-absorbent resin, and the method for obtaining a regenerated water-absorbent resin to be subjected to the recovery method according to the present invention is not limited to the following method.

FIG. 1 is a flow chart for explaining the method for recovering a water-absorbent resin according to the present invention. As shown in FIG. 1, in one embodiment, the preparation step of a regenerated water-absorbent resin (pre-treatment step) (S100) includes a fracturing step (S1) of fracturing the outer materials of the absorbent articles and the like; an inactivation/dehydration treatment step (S2) of subjecting the water-absorbent resins (recovered water-absorbent resins) contained in the absorbent articles fractured in the fracturing step (S1) to a shrinking/dehydration treatment (inactivation treatment); a washing/disinfection step (S3) of washing and/or disinfecting the water-absorbent materials containing the water-absorbent resins after the inactivation/dehydration treatment step (S2); a fractionation/filtration step (S4) of fractionating (filtering) the water-absorbent resins, the pulp, and the outer materials; an acid treatment step (S5) of subjecting the water-absorbent resins recovered in the fractionation/filtration step (S4) to an acid treatment; a neutralization step (S6) of performing a neutralization reaction; and a drying step (S7) of drying the water-absorbent resins. It should be noted that the order of the steps may be changed, or the steps may be omitted as necessary, as long as the water-absorbent resin (recovered water-absorbent resin) and the component members forming the absorbent article other than the water-absorbent resin can be separated from each other. For example, the washing/disinfection step (S3), the acid treatment step (S5), the neutralization step (S6), and the like are optional steps, and may be omitted as necessary. In addition to the above, a washing step and a concentration step (not shown) may be further performed as necessary.

(Fracturing Step (S1))

In this step, the outer material and the like forming the recovered absorbent article are fractured (shredded). The fracturing (shredding) method is not particularly limited, and any known method can be used. At this time, if necessary, the absorbent article after pulverization may be dispersed in a solvent to coarsely separate the outer material and the water-absorbent material (coarse separation). Here, the separation operation of the outer material and the water-absorbent material may be performed only once or may be performed a plurality of times. In addition, when the outer material is separated from the fractured (shredded) absorbent article, the separation may be performed as it is (directly) without using a solvent; however, from the viewpoint of separation efficiency, the separation is preferably performed by a method of dispersing the fractured (shredded) absorbent article in a solvent (i.e., wet separation). Examples of the solvent used for the separation include water and organic solvents, and water is preferred. In addition, examples of the wet separation method include a method of putting the recovered outer material and water-absorbent material into water and separating the outer material and the water-absorbent material into a material that precipitates in water and a material that floats on the water surface (specific gravity separation).

(Inactivation/Dehydration Treatment Step (S2))

In this step, inactivation and dehydration (shrinking) are performed on the water-absorbent resin (recovered water-absorbent resin) contained in the absorbent article. In general, a method of dispersing a water-absorbent material in a solvent (water or an organic solvent) and then separating the water-absorbent material from pulp (i.e., wet separation method) is used for separation of the pulp and the water-absorbent resin contained in the absorbent article (water-absorbent material). When the absorbent article (water-absorbent material) is dispersed in the solvent in this manner, the water-absorbent resin contained in the absorbent article may further swell in the solvent and may be in a state of a hydrogel (swollen gel particles). Therefore, when the wet separation as described above is performed, from the viewpoint of separation efficiency, it is preferable to separate the water-absorbent resin from the component members other than the water-absorbent resin, such as the outer material, by shrinking the water-absorbent resin and utilizing the difference in specific gravity or solubility. It should be noted that the inactivation/dehydration treatment can be performed by a known method, and specifically, the hydrogel of the water-absorbent resin can be shrunk by using a shrinking agent (an acid, an alkali, an inorganic salt, a polyvalent metal salt, or the like) together with the solvent.

The amount of the solvent used (amount used) in the above is not particularly limited, and as an example, the amount is preferably 0.1 times or more and 100 times or less, more preferably 0.5 times or more and 50 times or less, and particularly preferably 1 time or more and 10 times or less, based on the total mass of the absorbent article.

As the shrinking agent, an acid (an organic acid or an inorganic acid), an alkali, an inorganic salt, a polyvalent metal salt, or the like can be used, and among these, at least one selected from the group consisting of an organic acid, an inorganic acid, and a polyvalent metal salt is preferably used.

As the organic acid or inorganic acid, a water-soluble organic acid or water-soluble inorganic acid having a molecular weight of 500 or less is preferably used. A single type of the organic and inorganic acids may be used alone, or two or more types thereof may be used in combination. The amount of the organic acid and/or the inorganic acid used is not particularly limited, and is preferably 0.01 mass% or more and 10 mass% or less based on the total mass of the acids (organic acid and inorganic acid) and the water-absorbent resin.

An alkaline earth metal salt, a transition metal salt, or the like can be used as the polyvalent metal salt.

The alkaline earth metal salt to be used may be an alkaline earth metal salt of beryllium, magnesium, calcium, strontium, barium, or the like, and preferably a water-soluble salt. Among these, a salt of calcium or magnesium is preferable. Specific examples of the salts include calcium chloride, calcium nitrate, calcium hydroxide, magnesium chloride, magnesium nitrate, and magnesium hydroxide; and among these, calcium chloride is preferred. A single type of the alkaline earth metal salt may be used alone, or two or more types thereof may be used in combination.

As the transition metal salt, a transition metal salt such as iron, cobalt, nickel, and copper can be used, and preferably a water-soluble salt is used. Specific examples of the salts include iron salts such as iron lactate, iron chloride, iron sulfate, iron phosphate, and iron nitrate; cobalt salts such as cobalt acetate, cobalt stearate, cobalt chloride, cobalt sulfate, cobalt phosphate, and cobalt nitrate; nickel salts such as nickel acetate, nickel chloride, and nickel sulfate; and copper salts such as copper acetate, copper chloride, and copper sulfate. A single type of the transition metal salts may be used, or two or more types thereof may be used in combination.

Here, as described above, in one embodiment of the present invention, the water-absorbent resin may contain a polymer having a partially neutralized carboxy group. In such a form, the water-absorbent resin has a carboxy group ($-C(=O)OH$) and a neutralized carboxy group ($-C(=O)O^-A^+$; wherein $A^+$ is a monovalent cation (e.g., an alkali metal ion such as a sodium ion)). Such a water-absorbent resin absorbs and retains liquid (excrement, and the like) by, for example, allowing water molecules to enter gaps generated by electrostatic repulsion between dissociated carboxy groups ($C(=O)O^-$) in a swollen state. In contrast, by bringing the above-described polyvalent metal salt into contact with the water-absorbent resin, the dissociated carboxy groups are ionically crosslinked via polyvalent metal ions (for example, $Ca^{2+}$ or $Mg^{2+}$). As a result, the water-absorbent resin in a swollen state shrinks, and the liquid absorbed by the water-absorbent resin in a swollen state is released (i.e., dehydrated).

The amount of the polyvalent metal salt used is not particularly limited, and is preferably 0.01 mass% or more and 20 mass% or less, and more preferably 0.5 mass% or more and 10 mass% or less, based on the total mass of the polyvalent metal salt and the water-absorbent resin.

The treatment time in the treatment with the shrinking agent is not particularly limited as long as it is sufficient for the water-absorbent resin to be shrunk and dehydrated, and is, for example, about 5 minutes or more and 3 hours or less. The reaction temperature in the treatment with the shrinking agent is not particularly limited as long as it is sufficient for the water-absorbent resin to be shrunk and dehydrated, and is, for example, about 5°C or higher and 80°C or lower.

(Washing/Disinfection Step (S3))

In this step, the water-absorbent resin is washed and/or disinfected. It should be noted that the washing and disinfection treatment can be performed by a known method, and for example, the washing treatment and disinfection treatment can be performed by adding water, water containing a disinfectant, or the like, and stirring and mixing the mixture. In this case, a disinfectant such as hypochlorous acid, an aqueous solution of chlorine dioxide, ozone, hydrogen peroxide water, or electrolytic water (acidic electrolytic water) may be added to the solvent to perform disinfection treatment. In this case, the amount of the disinfectant added is, for example, 0 mass% or more (preferably more than 0 mass%) and 1 mass% or less per 100 mass% of the total mass of the absorbent article. It should be noted that the washing/disinfection step (S3) may be performed before the inactivation/dehydration treatment step (S2) or may be omitted.

(Fractionation/Filtration Step (S4))

In this step, the water-absorbent resin, the pulp, and the outer material are fractionated (separated). At this time, the water-absorbent material may contain a large amount of moisture or may be in a state of being dispersed in water, by the inactivation/dehydration treatment using a solvent (particularly, water) or the washing/disinfection treatment using water, as described above. Therefore, in this step, the water-absorbent resin, the pulp, and the outer material are preferably fractionated from each other by a known method such as filtration, centrifugal separation, or specific gravity separation.

As a fractionation (separation) method in this case, a known method can be adopted as is or with appropriate modification. Examples of the apparatus used for such fractionation (separation) include a gravity settling tank, a filtration apparatus (for example, a wire mesh), a screw press, a roller press, a rotary drum screen, a belt screen, a vibration screen, a pressure dehydrator, a vacuum dehydrator, a belt press, a centrifugal concentration dehydrator, and a liquid cyclone.

(Acid Treatment Step (S5))

In this step, the water-absorbent resins recovered in the fractionation/filtration step (S4) are subjected to an acid treatment. As described above, in the water-absorbent resin that has been subjected to the inactivation/dehydration treatment with the shrinking agent (particularly, the polyvalent metal salt), the dissociated carboxy groups are in a state of being ionically crosslinked via the polyvalent metal ions. The ionically crosslinked carboxy groups can be converted from the ionically crosslinked state to a free state ($C(=O)OH$) by an acid treatment. As a result, the water absorption performance (for example, CRC) of the regenerated water-absorbent resin can be restored, and the water absorption performance of the regenerated water-absorbent resin can be improved.

The acid treatment is not particularly limited as long as an acidic substance can be brought into contact with the water-absorbent resin, a known method can be adopted as is or with appropriate modification, and example thereof include a method in which the acidic substance is brought into contact with the water-absorbent resin by adding the water-absorbent resin (subjected to inactivation/dehydration treatment) while stirring a solution containing the acidic substance.

The acidic substance is not particularly limited, and for example, an organic acid and/or an inorganic acid can be used.

Examples of the organic acid include organic substances having an acid group such as a carboxy group or a sulfo group. Examples of the inorganic acid include sulfuric acid, hydrochloric acid, and nitric acid. Specific examples of the organic acid include citric acid, tartaric acid, malic acid, succinic acid, oxalic acid, gluconic acid, pentanoic acid, butanoic acid, propionic acid, glycolic acid, acetic acid, formic acid, and sulfonic acid (for example, methansulfonic acid, trifluoromethanesulfonic acid, benzenesulfonic acid, and p-toluenesulfonic acid). A single type of the organic and inorganic acids may be used alone, or two or more types thereof may be used in combination.

The amount of the acidic substance used is not particularly limited, and is preferably an amount that allows the pH of the dispersion containing the acidic substance and the water-absorbent resin to be in an acidic range. In addition, the reaction temperature in the treatment with the acidic substance is not particularly limited as long as it is sufficient for the liberation of the carboxy group to proceed as described above, and is, for example, about 5°C or more and 80°C or less.

(Neutralization Step (S6))

In this step, the water-absorbent resin obtained in the acid treatment step (S5) is subjected to a neutralization reaction. Specifically, the neutralization step (S6) is a step of adding an alkaline metal salt to the water-absorbent resin obtained in the acid treatment step (S5). By performing such a treatment, some of the carboxy groups in a free acid state in the water-absorbent resin are neutralized with alkali metal ions derived from the alkaline metal salt. This makes it possible to restore the water absorption performance of the water-absorbent resin.

The alkaline metal salt is not particularly limited, and examples thereof include hydroxides, carbonates, and hydrogen carbonates of alkali metals, such as lithium, sodium, and potassium. A single type of the alkaline metal salts may be used, or two or more types thereof may be used in combination.

The amount of the alkaline metal salt added is not particularly limited, and is preferably an amount such that the pH of the water-absorbent resin neutralized with the alkaline metal salt (regenerated water-absorbent resin) is about 4.5 or more and 8.0 or less. The method for measuring the pH of the water-absorbent resin is not particularly limited, and for example, the pH can be measured using a commercially available pH test paper and/or a commercially available pH meter.

The treatment time for neutralization by the alkaline metal salt is not particularly limited as long as it is sufficient for some of the carboxy groups in a free acid state to be neutralized with the alkali metal ions, and is, for example, about 5 minutes or more and 2 hours or less. In addition, the reaction temperature with the alkaline metal salt is not particularly limited as long as it is sufficient for some of the carboxy groups in a free acid state to be neutralized with the alkali metal ions, and is, for example, about 5°C or more and 90°C or less.

After the neutralization treatment, a washing treatment with water may be performed as necessary. As the type of water (washing water) used in the washing treatment, deionized water, tap water, distilled water, or the like can be used.

(Drying Step (S7))

In this step, (the hydrogel of) the water-absorbent resin is dried. This makes it possible to obtain a regenerated water-absorbent resin (actually, a mixture of the regenerated water-absorbent resin and the contaminants), which is a dried polymer. It should be noted that although the hydrogel of the water-absorbent resin is dehydrated by the inactivation/dehydration treatment step (S2) as well, the hydrogel is not sufficiently dehydrated only by the step (S2). Therefore, from the viewpoint of improving the separation efficiency, in one embodiment of the present invention, the mixture to be subjected to the crushing step (S200) described later is preferably a mixture of the regenerated water-absorbent resin and the contaminants obtained through the drying step (after the drying step).

As a method for drying the hydrogel of the water-absorbent resin, a known method can be adopted as is or with appropriate modification, and examples thereof include heating drying, hot air drying, reduced pressure drying, fluidized bed drying, infrared drying, microwave drying, drying through azeotropic dehydration with a hydrophobic organic solvent, and stirring drying in which drying is performed while moving a material to be dried. Among these, from the viewpoint of drying efficiency, heating drying, hot air drying, and stirring drying are preferable. Examples of the apparatus used for stirring drying include stirring dryers such as a paddle dryer and a rotary drum dryer.

From the viewpoint of more efficiently performing the crushing step (S200) described later, the drying temperature is preferably 120°C or more and 250°C or less, more preferably 130°C or more and 230°C or less, and particularly preferably 140°C or more and 200°C or less. In addition, the drying time is preferably 3 hours or less, more preferably 10 minutes or more and 2 hours or less, still more preferably 20 minutes or more and 1.5 hours or less, and particularly preferably 30 minutes or more and 1 hour or less.

The mixture in which the regenerated water-absorbent resin, which have been obtained as described above, and the contaminants are integrated is subsequently subjected to a crushing step (S200) and a separation step (S300).

[2-2] Crushing Step

In this step, a physical force is applied to the mixture in which the water-absorbent resin and the contaminants are fixed and integrated, and the mixture (i.e., the water-absorbent resin and the contaminants) is crushed. By crushing the mixture of the water-absorbent resin and the contaminants to release the water-absorbent resin and the contaminants from the integrated state and to make the water-absorbent resin and the contaminants independent of each other in this manner, the water-absorbent resin and the contaminants can be efficiently separated in the subsequent separation step. It should be noted that the crushing step in the present invention may be any step as long as it is to crush a mixture in which a water-absorbent resin and contaminants are fixed and integrated, and at this time, substances to be crushed may be in a state where the water-absorbent resin and the contaminants are partially independent from each other. In other words, the substances to be subjected to the crushing step may further contain not only the mixture in which the water-absorbent resin and the contaminants are fixed and integrated, but also the water-absorbent resin and the contaminants in a state of being independent from each other.

In this step, "crushing the mixture (the mixture in which the water-absorbent resin and the contaminants are fixed and integrated)" means that the mixture in which the water-absorbent resin and the contaminants are fixed and integrated is released from the integrated state, that is, the water-absorbent resin and the contaminants are independently separated from each other. Therefore, in a case where the water-absorbent resin and the contaminants are obtained in a state of being still integrated with each other (the state of the mixture is maintained) as a result of applying a physical force to the mixture, the operation is not included in the crushing step according to the present invention. The phrase "applying a physical force to the mixture" means applying an external force necessary to crush the mixture in which the water-absorbent resin and the contaminants are fixed and integrated. In this case, the degree of crushing may be such that at least a part of the mixture is separated into the water-absorbent resin and the contaminants, and the crushing may not necessarily be complete, and may be partial. In the case where the crushing is partial as described above, the mixture after the crushing includes the water-absorbent resin and the contaminants in a state of being independent from each other, and a mixture which is not crushed (a mixture in which the water-absorbent resin and the contaminants are integrated), as described in the section [1-6] Mixture.

In addition, from the viewpoint of increasing the separation efficiency between the water-absorbent resin and the contaminants in the separation step performed later, it is preferable that the crushing (preferably pulverization) be performed without using a solution (in a dry manner) rather than in a solution such as water.

In addition, from the viewpoint of ease of crushing, a classification step may be additionally performed before the crushing step.

The method of applying a physical force to the integrated mixture is not particularly limited, and examples thereof can include stirring, vibration, tearing, cutting (shredding), crushing, and pulverization. In particular, the crushing step is preferably performed by crushing (preferably pulverizing) the integrated mixture, since the pulp, which is the main component of the contaminants, is less likely to be broken, and the water-absorbent resin and the contaminants are easily separated from each other in the separation step performed later. It should be noted that the term "crushing" used herein is not particularly limited, and means that the treatment is performed until the particle size of the mixture after crushing becomes preferably less than the 4 mm, more preferably less than the 3 mm, still more preferably less than the 2 mm, particularly preferably the 1 mm or less, and most preferably less than the 1 mm. In addition, when the particle size is further reduced (for example, the particle size may be less than 500 $\mu$m, less than 300 $\mu$m, or less than 150 $\mu$m), the term "pulverization" may be used.

The apparatus (pulverizing apparatus) used in the crushing step is not particularly limited, and examples thereof include a pin mill, a cyclone mill, a roll mill, a roller mill, a hammer mill, a rod mill, a ball mill, a jet mill, a bead mill, a vibration mill, a knuckle type pulverizer, and a cylindrical mixer. These apparatuses may be used in combination. Among these, the crushing step is preferably performed using one or two or more apparatuses selected from the group consisting of a pin mill, a cyclone mill, a roll mill, a roller mill, a hammer mill, a rod mill, a ball mill, a jet mill, and a bead mill. By using these apparatuses, it becomes easy to selectively crush the water-absorbent resin while suppressing the breakage of the pulp, which is the main component of the contaminants. From such a viewpoint, the crushing step is more preferably performed using one or two or more apparatuses selected from the group consisting of a pin mill, a cyclone mill, a roll mill, a roller mill, and a hammer mill, and particularly preferably performed using a roll mill or a hammer mill.

The crushing conditions of the mixture are not particularly limited, and as described above, it is preferable that the conditions be such that the water-absorbent resin can be selectively crushed while suppressing the breakage of the pulp, which is the main component of the contaminants. Specifically, it is preferable to set the conditions satisfying the particle size of the water-absorbent resin contained in the mixture after crushing < the size of the contaminants contained in the mixture after crushing (mainly the size of the pulp). In other words, the crushing step is preferably performed so that the particle size of the water-absorbent resin contained in the mixture after crushing is smaller than the size of the contaminants contained in the mixture after crushing (mainly the size of the pulp). It should be noted that fibrous substances such as pulp are not necessarily linear, and may be curved in a curved shape or the like. Therefore, when the contaminants are fibrous substances such as pulp, the size of the contaminants (mainly the size of the pulp) refers to the length (distance) in the long side direction of the smallest rectangle surrounding the outer periphery of the contaminants (pulp) in a state of being contained in the mixture after crushing.

In one embodiment, regarding the particle size of the water-absorbent resin contained in the mixture after the crushing, the particle size (defined by sieve classification) of 60 mass% or more, more preferably 70 mass% or more, further preferably 75 mass% or more, particularly preferably 80 mass% or more, and most preferably 90 mass% or more (upper limit: 100 mass%) of the water-absorbent resins contained in the mixture after the crushing may be 3 mm or less, less than 3 mm, 2 mm or less, less than 2 mm, 1 mm or less, less than 1 mm, 0.5 mm (500 $\mu$m) or less, less than 0.5 mm (500 $\mu$m), 0.3 mm (300 $\mu$m) or less, less than 0.3 mm (300 $\mu$m), 0.2 mm (200 $\mu$m) or less, less than 0.2 mm (200 $\mu$m), 0.15 mm (150 $\mu$m) or less, or less than 0.15 mm (150 $\mu$m). On the other hand, the lower limit of the particle size of the water-absorbent resin contained in the mixture after the crushing is not particularly limited, and may be, for example, 0.01 mm (10 $\mu$m) or more, or 0.05 mm (50 $\mu$m) or more.

The crushing time is not particularly limited as long as the mixture is crushed. The crushing time can be appropriately adjusted to obtain a desired effect. At this time, it is preferable to perform the crushing while confirming the state (crushed state) of the mixture visually, with an SEM, or the like. In other words, in a preferred embodiment, the recovery method according to the present invention includes, after the mixture is crushed (after the crushing step), observing the crushed mixture to confirm (or verify by measurement) that the water-absorbent resin and the contaminants contained in the mixture are in a state of being independent of each other (in a state of not being fixed to each other) (observation step). It should be noted that the confirmation (observation) of the crushed state of the mixture may be performed by determining whether or not the crushed mixture passes through a sieve having a predetermined opening.

In addition, the temperature during the crushing (temperature of the mixture) is not particularly limited either, and is, for example, preferably ordinary temperature (room temperature: 25°C) or more and 70°C or less, more preferably ordinary temperature (room temperature: 25°C) or more and 60°C, or less, and particularly preferably ordinary temperature (room temperature: 25°C) or more and to 50°C or less.

In addition, from the viewpoint of further improving the separation efficiency, the relative humidity is preferably 65% RH or less, more preferably 60% RH or less, and particularly preferably 55% RH or less. On the other hand, the lower limit thereof is not particularly limited, and is, for example, 20% RH or more.

In one embodiment, the mixture to be subjected to the crushing step may be a mixture in which the regenerated water-absorbent resin and the contaminants are integrated. Therefore, in one embodiment of the present invention, the mixture to be subjected to the crushing step may be a mixture of the contaminants and a regenerated water-absorbent resin obtained through the pre-treatment step (preparation step of a regenerated water-absorbent resin by wet separation) in which the water-absorbent resin contained in the water-containing absorbent article (water-absorbent resin swollen by water absorption) is separated from the contaminants. From the viewpoint of obtaining a water-absorbent resin having less contaminants, the mixture of the regenerated water-absorbent resin and the contaminants is preferably obtained through a wet separation treatment exemplified by the description in the section [2-1] Preparation Step of Regenerated Water-Absorbent Resin (Pre-treatment Step). It should be noted that, in this case, preferred embodiments, conditions, and the like of the pre-treatment step (preparation step of a regenerated water-absorbent resin) are as described in the section [2-1] Preparation Step of Regenerated Water-Absorbent Resin (Pre-treatment Step), but the preparation step (pre-treatment step) of a regenerated water-absorbent resin to be subjected to the crushing step is not limited thereto.

The above-described preparation step of a regenerated water-absorbent resin (pre-treatment step) can be performed particularly when a regenerated water-absorbent resin is obtained from a used absorbent article. Therefore, in the above embodiment, the "water-containing absorbent article" may be a used absorbent article. Accordingly, in one embodiment of the present invention, the mixture to be subjected to the crushing step may be a mixture of the contaminants, and a regenerated water-absorbent resin obtained through the pre-treatment step (preparation step of a regenerated water-absorbent resin by wet separation) in which the water-absorbent resin contained in the used absorbent article is separated from the contaminants.

In addition, the mixture to be subjected to the crushing step may be prepared without undergoing the wet separation treatment (preparation step of a regenerated water-absorbent resin (pre-treatment step)) as described above. For example, in a pre-use waste absorbent article that has absorbed moisture during storage of the absorbent article, the water-absorbent material may absorb moisture, and the water-absorbent resin and the pulp may be firmly fixed. In order to recover the water-absorbent resin from such a pre-use waste absorbent article, the outer material and the like may be fractured (shredded), and then the outer material and the like and the water-absorbent resin may be separated by a known method without undergoing wet separation using a solvent (i.e., in a dry manner) to prepare a mixture. In other words, the water-absorbent resin obtained by fracturing the pre-use waste absorbent article and coarsely separating the outer material and the like may be directly subjected to the crushing step.

Therefore, in another embodiment of the present invention, the mixture to be subjected to the crushing step may be a mixture obtained by recovering from an absorbent article (particularly, a pre-use waste absorbent article) that has absorbed moisture (a mixture in which a recovered water-absorbent resin and contaminants are integrated). More specifically, in another embodiment of the present invention, the mixture to be subjected to the crushing step may be a mixture obtained by recovering from the pre-use waste absorbent article without undergoing wet separation (in a dry manner) (a mixture in which the water-absorbent resin and the contaminants are integrated).

The mixture to be subjected to the crushing step (particularly, the mixture in which the regenerated water-absorbent resin and the contaminants are integrated) preferably has a relatively small content of the contaminants from the viewpoint of easily obtaining a water-absorbent resin in which the amount of the contaminants mixed is further reduced. Specifically, the content of the contaminants contained in the mixture (particularly, the mixture in which the regenerated water-absorbent resin and the contaminants are integrated) is preferably less than 20 mass% based on the total mass of the mixture (when the total mass is 100 mass%). Furthermore, from the same viewpoint as described above, the content of the contaminants is more preferably 15 mass% or less, still more preferably 10 mass% or less, and particularly preferably 5 mass% or less, based on the total mass of the mixture (when the total mass is 100 mass%). The mixture in which the content of the contaminants is within the above range can be obtained, for example, by undergoing a wet separation treatment exemplified in the preparation step of a regenerated water-absorbent resin (pre-treatment step). In other words, in one embodiment, the mixture to be subjected to the crushing step is a mixture in which the content of the contaminants is within the above range and the regenerated water-absorbent resin and the contaminants are integrated. On the other hand, the lower limit of the content of the contaminants is not particularly limited, and is, for example, 0.5 mass% or more based on the total mass of the mixture (when the total mass is 100 mass%).

Also, the mixture to be subjected to the crushing step preferably has a relatively small water-soluble content from the viewpoint of easily obtaining a water-absorbent resin in which the amount of contaminants mixed is further reduced. The water-soluble portion has an action of fixing the contaminants to the water-absorbent resin. Therefore, in a mixture having a small water-soluble content (particularly, a mixture in which the regenerated water-absorbent resin and the contaminants are integrated), the adhesion between the water-absorbent resin and the contaminants is relatively weak, and it can be said that these are more easily separated. Specifically, the water-soluble content contained in the mixture (particularly, the mixture in which the regenerated water-absorbent resin and the contaminants are integrated) is preferably 45 mass% or less based on the total mass of the mixture (when the total mass is 100 mass%). Furthermore, from the same viewpoint as described above, the water-soluble content is more preferably 35 mass% or less, still more preferably 10 mass% or less, and particularly preferably 5 mass% or less, based on the total mass of the mixture (when the total mass is 100 mass%). In the case of a mixture in which the regenerated water-absorbent resin and the contaminants are integrated, which has been obtained through the wet separation treatment exemplified in the above-described preparation step of a regenerated water-absorbent resin (pre-treatment step), the water-soluble content can achieve the above-described range since the water-soluble portion is dissolved in an aqueous solution to separate the water-absorbent resin and the contaminants. In other words, in one embodiment, the mixture to be subjected to the crushing step is a mixture in which the water-soluble content is within the above range and the regenerated water-absorbent resin and the contaminants are integrated. On the other hand, the lower limit of the water-soluble content is not particularly limited, and is, for example, 0.5 mass% or more based on the total mass of the mixture (when the total mass is 100 mass%).

It should be noted that, in the above description, the method for measuring the water-soluble content is in accordance with the method described in the section [1-8-2] Water-Soluble Content (16-Hour Value) of Water-Absorbent Resin and Mixture.

Examples of the mixture in which both the content of the contaminants and the water-soluble content can be within the preferable ranges include a mixture of the regenerated water-absorbent resin and the contaminants obtained through the wet separation treatment exemplified in the above-described preparation step of a regenerated water-absorbent resin (pre-treatment step). In one embodiment, such a mixture in which the regenerated water-absorbent resins and the contaminants are integrated may contain components derived from the shrinking agent since the mixture is subjected to the inactivation/dehydration treatment with the shrinking agent (inactivation/dehydration treatment step (S2)). Examples of such a component include polyvalent metal ions contained in polyvalent metal salts. Therefore, in one embodiment, the content of the polyvalent metal ion (in the case where two or more types of polyvalent metal ions are contained, the total amount thereof) contained in the mixture (particularly, the mixture in which the regenerated water-absorbent resin and the contaminants are integrated) to be subjected to the crushing step may be 0.5 mass% or more based on the total mass of the mixture (particularly, the mixture in which the regenerated water-absorbent resin and the contaminants are integrated) (when the total mass is 100 mass%). The content of the polyvalent metal ion may be 1 mass% or more, or may be 2 mass% or more, based on the total mass of the mixture. On the other hand, the upper limit of the content of the polyvalent metal ion contained in the mixture is not particularly limited, and may be, for example, 5 mass% or less.

Examples of the polyvalent metal ion contained in the mixture include an alkaline earth metal ion and a transition metal ion. Here, as specific examples of the alkaline earth metal ion and the transition metal ion, the description in the subsection (Inactivation/Dehydration Treatment Step (S2)) in the section [2-1] Preparation Step of Regenerated Water-Absorbent Resin (Pre-treatment Step) is referred to. Among these, a calcium salt and/or a magnesium salt are preferably used as the shrinking agent, and therefore, in one embodiment, the content (total amount) of calcium ions and magnesium ions contained in the mixture (particularly, the mixture in which the regenerated water-absorbent resin and the contaminants are integrated) to be subjected to the crushing step may be 0.3 mass% or more based on the total mass of the mixture (particularly, the mixture in which the regenerated water-absorbent resin and the contaminants are integrated) (when the total mass is 100 mass%). The content (total amount) of calcium ions and magnesium ions may be 1 mass% or more, or may be 1.8 mass% or more, based on the total mass of the mixture. On the other hand, the upper limit of the content (total amount) of calcium ions and magnesium ions contained in the mixture is not particularly limited, and may be, for example, 5 mass% or less.

The content of the polyvalent metal ion contained in the mixture is measured using an ICP emission spectrometer as follows: first, 1 g of the mixture is accurately weighed and added to a porcelain crucible, and carbonized in an electric muffle furnace at 550°C for 2 hours. The carbonized mixture is then rinsed with a 1 mass% (concentration) aqueous nitric acid solution and filtered. Next, the resulting filtrate is diluted in a 50 mL volumetric flask with a 1 mass% aqueous nitric solution. A calibration curve is created using a standard solution having a known concentration (for example, a standard solution of Ca or Mg), and the amount of polyvalent metal is analyzed using an ICP emission spectrometer.

Further, from the viewpoint of easily obtaining a water-absorbent resin in which the amount of contaminants mixed is further reduced, the mixture to be subjected to the crushing step (particularly, a mixture in which the regenerated water-absorbent resin and the contaminants are integrated) preferably has a low moisture content rate. In a mixture having a low moisture content rate, the adhesion between the water-absorbent resin and the contaminants is relatively weak, and these are more easily separated. Specifically, the moisture content rate of the mixture (particularly, the mixture in which the regenerated water-absorbent resin and the contaminants are integrated) is preferably 20 mass% or less. From the same viewpoint as described above, the moisture content rate of the mixture is more preferably 15 mass% or less, still more preferably 10 mass% or less, particularly preferably 8 mass% or less, and most preferably 5 mass% or less. To achieve this moisture content rate, the mixture before being subjected to the crushing step may be dried. On the other hand, the lower limit of the moisture content rate of the mixture is not particularly limited, and is, for example, 3 mass% or more.

Here, the moisture content rate of the mixture is determined from a change in mass when 1 g of the mixture is heated by drying operation at 180°C for 3 hours. Specifically, the moisture content rate is expressed by Equation (5) below.
[Math. 5]

Equation (5):
Moisture content rate [mass%]
= [1 - {(mass of mixture after drying operation [g])/(mass of mixture before drying operation [g])}] × 100

Furthermore, from the viewpoint of easily obtaining a water-absorbent resin in which the amount of contaminants mixed is further reduced, the mixture after the crushing (i.e., to be subjected to the separation step) preferably has a lower moisture content rate. From the same viewpoint, the mixture after the crushing (i.e., to be subjected to the separation step) preferably has a smaller particle size. Specifically, the mixture after the crushing (i.e., to be subjected to the separation step) (particularly, the mixture of the regenerated water-absorbent resin and the contaminants) is preferably in any of the following forms (I) to (III): (I) in one embodiment, the moisture content rate of the mixture after the crushing to be subjected to the separation step is 10 mass% or less, and the particle size of the mixture after the crushing to be subjected to the separation step is less than 0.15 mm (150 μm); (II) in one embodiment, the moisture content rate of the mixture after the crushing to be subjected to the separation step is 8 mass% or less, and the particle size of the mixture after the crushing to be subjected to the separation step is less than 0.3 mm (300 μm); and (III) in one embodiment, the moisture content rate of the mixture after the crushing to be subjected to the separation step is 5 mass% or less, and the particle size of the mixture after the crushing to be subjected to the separation step is less than 0.5 mm (500 μm). In other words, the crushing step is preferably performed so that the moisture content rate of the mixture after crushing and the particle size of the mixture after crushing are within the above ranges. In each of the embodiments, the lower limit of the particle size of the mixture after crushing to be subjected to the separation step is not particularly limited, and may be, for example, 0.01 mm (10 μm) or more, or 0.05 mm (50 μm) or more. The term "particle size" used herein refers to a mass-average particle size (D50) unless otherwise specified, and is determined by the following procedure. In each of the embodiments, the lower limit of the moisture content rate is not particularly limited, but is, for example, 3 mass% or more.

(Measurement Method of Mass-Average Particle Size (D50))

10.0 g of the water-absorbent resin or the mixture after the crushing is charged into a JIS standard sieve (The IIDA TESTING SIEVE/inner diameter; 80 mm) (JIS Z 8801-1 (2000)) or a sieve corresponding to the JIS standard sieve, and classified for 5 minutes using a vibration classifier (IIDA SIEVE SHAKER/Type: ES-65 type, Ser. No. 0501). The openings of the JIS standard sieves or sieves corresponding thereto are 850 μm, 710 μm, 600 μm, 500 μm, 425 μm, 300 μm, 212

μm, 150 μm, and 45 μm.

After the classification, the particle size distribution is determined from the mass of the water-absorbent resins remaining on each sieve (the mass of the mixture after the crushing when the substance to be measured is the mixture after the crushing), and for the obtained particle size distribution, a graph is created by plotting the residual percentage R of each particle size on a logarithmic probability paper, and the particle size corresponding to R = 50 mass% is read as the mass-average particle size (D50) from the graph. It should be noted that the mass-average particle size (D50) is a particle size corresponding to 50 mass% of the entire water-absorbent resins (the entire mixture after the crushing when the substance to be measured is the mixture after the crushing).

[2-3] Separation Step

In this step, the water-absorbent resin and the contaminants are separated from the mixture crushed in the crushing step. The water-absorbent resin and the contaminants separated from the mixture crushed in the crushing step are in a state of being easily separated from each other. Therefore, when the separation is performed in this step, the water-absorbent resin and the contaminants are easily separated from each other, and a water-absorbent resin in which the amount of the contaminants mixed is further reduced is obtained.

The water-absorbent resin separated from the crushed mixture may fix to the contaminants again when the water-absorbent resin contains water (absorbs moisture), and therefore, for the purpose of avoiding this, the separation step is preferably performed in a dry manner.

The apparatus used for performing the separation step is not particularly limited as long as the water-absorbent resin and the contaminants can be separated, and in one embodiment, the separation step is performed using a sieve classification apparatus and/or a dry classification apparatus.

Specific examples thereof include sieve classification apparatuses such as a vibrating sieve machine, a low head screen, an electromagnetic screen, and a tumbling sieve; and dry classification apparatuses such as various air flow classifiers, for example, an air flow classifier using a centrifugal force such as a micron separator and a cyclone centrifugal separator, an air flow classifier using gravity, and an air flow classifier using an inertial force. These apparatuses may be used in combination.

This step may be performed a plurality of times (twice or more). By performing the separation step a plurality of times (twice or more), it may be possible to remove contaminants more efficiently. In this case, it is preferable to appropriately change conditions such as the type of the sieve and the classification method. In one embodiment, the separation step may be in any of the following modes: (i) including at least one or more separation steps by a sieve classification apparatus and at least one or more separation steps by an air flow classifier in any order; (ii) including at least two or more separation steps by a sieve classification apparatus; and (iii) including at least two or more separation steps by an air flow classifier. It should be noted that the modes (ii) and (iii) can be distinguished from the mode (i) in that the separation step by an air flow classifier is not performed in the mode (ii), and the separation step by a sieve classification apparatus is not performed in the mode (iii). In addition, in the modes (i) to (iii), the upper limit of the number of times (total number of times) of performing the separation step is not particularly limited, and is, for example, 10 times or less in total.

As a specific example of the mode (i), for example, the separation may be performed using a sieve classification apparatus in the first separation, and the separation may be performed using an air flow classifier in the second separation. In addition, the separation by a sieve classification apparatus and the separation by an air flow classifier may be performed in the reverse order to that described above. In other words, the separation may be performed using an air flow classifier in the first separation, and the separation may be performed using a sieve classification apparatus in the second separation.

Furthermore, the mode (i) may be a mode in which the separation by a sieve classification apparatus is performed twice or more and the separation by an air flow classifier is performed at least once or more, or a mode in which the separation by a sieve classification apparatus is performed at least once or more and the separation by an air flow classifier is performed twice or more. It should be noted that the order of the separation steps by these classification apparatuses/classifiers is not limited, and the separation steps may be performed in any order. In other words, the separation operation (separation step) may be performed three or more times in total in any order using the separation by a sieve classification apparatus and the separation by an air flow classifier. Examples thereof include a method of performing separation using a sieve classification apparatus in the first separation, performing separation using an air flow classifier in the second separation, and performing separation by a sieve classification apparatus again in the third separation.

In the modes (i) to (iii), the type, conditions, and the like of the classification apparatus/classifier may be changed every time the separation operation is performed. For example, in the mode (i), the separation may be performed using a vibrating sieve machine in the first separation, the separation may be performed using an air flow classifier using a centrifugal force in the second separation, and the separation may be performed using an air flow classifier using gravity in the third separation.

As the sieve classification apparatus used in the modes (i) and (ii), a vibrating sieve machine is preferably used. As the air flow classifier used in the modes (i) and (iii), an air flow classifier using a centrifugal force is preferably used, and among these, a cyclone centrifugal separator is more preferably used. In other words, the separation step by an air flow classifier is preferably a separation step by a cyclone centrifugal separator.

Among the modes (i) to (iii), the separation step according to the present invention is preferably performed by the mode (i). More preferably, the separation step may include, in the following order, at least one or more separation steps by a sieve classification apparatus and at least one or more separation steps by an air flow classifier. In this case, the separation step by a cyclone centrifugal separator may be performed as the separation step by an air flow classifier. Examples thereof include a method of performing separation using a vibrating sieve machine in the first separation and performing separation using a cyclone centrifugal separator in the second separation. In other words, in another embodiment, the separation step may include, in the following order, a separation step by a sieve classification apparatus and a separation step by a cyclone centrifugal separator. By combining different separation methods as in the above embodiment, not only the amount of contaminants mixed can be further reduced, but also the recovery rate of the water-absorbent resin described below can be improved. Therefore, according to the present invention, there is also provided a method for improving a recovery rate of a water-absorbent resin, the method including, in the following order, a crushing step of crushing a mixture in which a water-absorbent resin and a contaminant are fixed and integrated, by applying a physical force to the mixture, and a separation step of separating the water-absorbent resin and the contaminant from the mixture crushed in the crushing step, wherein the separation step is any of the modes (i) to (iii). In this case, the separation step is preferably the mode (i), and more preferably includes a separation step by a sieve classification apparatus and a separation step by an air flow classifier, in any order. Also, in the method for improving the recovery rate of a water-absorbent resin, the separation step may include a separation step by a sieve classification apparatus and a separation step by a cyclone centrifugal separator, in any order.

Here, the recovery rate of the water-absorbent resin (water-absorbent resin recovery rate) indicates a mass ratio (proportion) of the water-absorbent resin recovered after the final separation step to the total mass of the mixture after the crushing (i.e., the mixture after the crushing to be subjected to the final separation step), the mixture after the crushing including the water-absorbent resin and the contaminants immediately before the final separation step, and the integrated mixture remaining without being crushed, and is represented by Equation (6) below. It should be noted that, when the separation step is performed only once, the "final separation step" as used herein means the separation step. In addition, in a case where the separation step is performed a plurality of times, the "final separation step" means the last separation step performed. For example, when the separation step is performed twice, the "final separation step" refers to the second separation step. In this case, the recovery rate is a mass ratio (proportion) of the water-absorbent resin recovered after the second separation step to the total mass of the mixture after the crushing immediately before the second separation step.

[Math. 6] Recovery rate of water-absorbent resin (mass%) = {(mass of water-absorbent resin recovered after final separation step)/(total mass of mixture after crushing including water-absorbent resin and contaminants immediately before final separation step)} × 100          Equation (6):

As described above, one of the reasons why the separability of the contaminants is improved by combining the separation by a sieve classification apparatus and the separation by an air flow classifier is likely to be an effect of "combination of different separation methods". For example, a sieve classification apparatus separates the water-absorbent resin and the contaminants by utilizing the difference in "size" between them, whereas an air flow classifier separates the water-absorbent resin and the contaminants by utilizing the difference in "specific gravity" between them, and therefore, it is presumed that a synergistic effect is obtained in the separability. However, as the particle size of the water-absorbent resin and the size of the contaminants contained in the mixture after the crushing become smaller, the difference in specific gravity between the water-absorbent resin and the contaminants decreases, and therefore, there is a possibility that the effect obtained by combining the sieve classification apparatus and the air flow classifier is reduced. In such a case, when it is desired to particularly improve the separation efficiency of the contaminants (i.e., when it is desired to reduce the residual amount of the contaminants contained in the water-absorbent resin as much as possible although the recovery rate of the water-absorbent resin may be low to some extent), a method of separating a low particle size portion (a fraction having a small particle size) containing a large amount of contaminants that are difficult to separate by a sieve classification operation or the like and then removing (discarding) the low particle size portion may be adopted.

In addition, the mixture (mixture in which the water-absorbent resin and the contaminants remaining without being crushed are integrated) may be crushed between the respective separations. In other words, in one embodiment, the recovery method according to the present invention may include, in the following order, a first crushing step, a first separation step, a second crushing step, and a second separation step. Furthermore, in the above embodiment, it is preferable that after the first separation step is performed, the state of the mixture after the crushing be observed, and then the second crushing step be performed. With such a configuration, a fraction from which contaminants have not been sufficiently separated in the first separation step can be subjected to the second crushing step, and therefore, the recovery rate and purity of the water-absorbent resin can be improved.

The humidity at the time of performing the separation step is not particularly limited, and from the viewpoint of further improving the separation efficiency, the relative humidity is preferably 65% RH or less, more preferably 60% RH or less, and particularly preferably 55% RH or less. On the other hand, the lower limit thereof is not particularly limited, and is, for example, 20% RH or more.

In addition, due to the moisture contained in the mixture after the crushing, the mixture after the crushing may adhere to the inner wall surface (inner sidewall) of the separation apparatus (formation of an adhered substance), or the substance adhered in this manner may aggregate during the separation operation and then peel off to form a coarse aggregate (formation of an aggregate). Therefore, in one embodiment, the separation apparatus may be used in a heated state or a heat-retained. By heating or heat retaining of the separation apparatus as described above, the formation of the above-described adhered substance or aggregate can be suppressed, which is effective. Here, heating refers to the inner wall surface of the separation apparatus being heated to 40°C or more, and preferably 50°C or more. On the other hand, the upper limit of the heating temperature is not particularly limited, and is preferably 100°C or less in order to suppress the denaturation of the water-absorbent resin. The term heat retaining the temperature refers to the inner wall surface of the separation apparatus being kept at 40°C or more and 100°C or less, and may be 50°C or more and 90°C or less.

Examples of the method for bringing the separation apparatus into a heated state and/or a heat-retained state include a method of providing a heating means or a heat-retaining means inside or outside the separation apparatus, or a method of attaching the heating means or the heat-retaining means to the separation apparatus. The heating method using such a heating means is not particularly limited as long as the separation apparatus can be heated, and examples thereof include a method of providing a jacket that can be heated by electricity or steam in the separation apparatus, and a method of winding a heating resistor around the separation apparatus. Further, examples of the heat retention method using the heat-retaining means include a method of winding a heat insulator (heat insulating material) around the separation apparatus. The heat insulator (heat insulating material) to be used is not particularly limited, and examples thereof include fibrous heat insulating materials such as asbestos heat insulating materials, rock wool heat insulating materials, glass wool heat insulating materials, and heat-resistant inorganic fiber heat insulating materials; powdery heat insulating materials such as calcium silicate heat insulating materials and aqueous perlite heat insulating materials; foamed heat insulating materials such as polystyrene foam heat insulating materials, hard urethane foam heat insulating materials, and foam glass heat insulating materials; metal foil heat insulating materials, and air layer heat insulating materials such as paper honeycomb. It should be noted that two or more of the heating means/heat retaining means may be used in combination, or both the heating means and the heat retaining means may be used.

Furthermore, as another method for suppressing the adhesion (formation of an adhered substance) to the inner wall surface of the separation apparatus and the formation of a coarse aggregate due to the moisture contained in the mixture after the crushing as described above, the following method may be performed. In other words, in another embodiment, examples include a method in which the inner wall surface of the separation apparatus may be formed of a hydrophobic material. By forming the inner wall surface of the separation apparatus with such a hydrophobic material, the mixture after crushing is less likely to adhere, and the formation of adhered substances and the aggregate can be suppressed. As such a hydrophobic material, a material with a contact angle against water of 60° or more and a heat distortion temperature of 70°C or more is preferable. Here, the heat distortion temperature means a value measured in accordance with ASTM D648. When the contact angle of the material of the contact surface against water is 60° or more, the crushed mixture containing moisture is less likely to adhere to the inner wall surface (inner sidewall) of the separation apparatus. In addition, when the heat distortion temperature of the material of the contact surface is 70°C or more, the resistance of the heated (high-temperature) mixture after the crushing in the separation operation improves, allowing the stable separation operation to be continued for an extended period. It should be noted that the upper limits of the contact angle and the heat distortion temperature are not particularly limited, and may be 100° or less and 150°C or less, respectively. Examples of such a material (hydrophobic material) include synthetic resins such as polyethylene, polypropylene, polyester, polyamide, fluororesin, polyvinyl chloride, epoxy resin, and silicon resin; inorganic fillers such as glass, graphite, bronze, and molybdenum disulfide; organic fillers such as polyimide; and composite materials obtained by mixing the synthetic resins.

The water-absorbent resin (water-absorbent resin derived from the mixture) obtained through the recovery method according to the present invention as described above has an extremely low content of contaminants. Specifically, in the recovered water-absorbent resin (water-absorbent resin derived from the mixture), the content of the contaminants may be 5 mass% or less based on the total mass of the water-absorbent resin (including the contaminants) (when the total mass is 100 mass%). Furthermore, the content of the contaminants may be 3 mass% or less, or 2 mass% or less. On the other hand, the lower limit value thereof may be theoretically 0 mass%.

[2-4] Recycling of Water-Absorbent Resin Derived from Mixture

There is no problem if the water-absorbent resin recovered through the crushing step and the separation step (herein also referred to as "water-absorbent resin derived from the mixture") is reused (recycled) as it is. In particular, a water-absorbent resin having a particle size of less than 150 $\mu$m (hereinafter also simply referred to as "fine powder") is preferably reused through the following fine powder recovery step.

Usually, producing a water-absorbent resin may be performed through, for example, a step of preparing an aqueous monomer solution, a polymerization step, an optionally performed hydrogel-grinding step, a drying step, an optionally performed pulverization step after drying, an optionally performed classification step, an optionally performed fine powder recovery step, a surface crosslinking step, an optionally performed cooling step, and an optionally performed granulating step. In the production of such a water-absorbent resin, the water-absorbent resin derived from the mixture obtained through the recovery method according to the present invention is preferably recovered in the fine powder recovery step.

The step of preparing an aqueous monomer solution is a step of preparing an aqueous solution (hereinafter, referred to as "aqueous monomer solution") containing, as a main component, an unsaturated monomer (preferably unsaturated monomer containing a carboxy group, more preferably acrylic acid (salt)) as a raw material of the water-absorbent resin. The polymerization step is a step of polymerizing the unsaturated monomer in the aqueous monomer solution obtained in the step of preparing an aqueous monomer solution to obtain a crosslinked polymer in the form of a hydrogel (hereinafter also referred to as "hydrogel"). The hydrogel-grinding step is a step of gel-grinding the hydrogel obtained in the polymerization step. The drying step is a step of obtaining a dried water-absorbent resin (hereinafter also referred to as "dried product") by drying the hydrogel/hydrogel particles obtained in the polymerization step and/or the hydrogel-grinding step to have a desired resin solid content amount. The pulverization step is a step of appropriately pulverizing the dried product obtained in the drying step. The classification step is a step of classifying the dried product obtained in the drying step or the pulverized product of the dried product obtained in the pulverization step after drying to obtain a particulate dried product having a desired particle size. The surface crosslinking step is a step of providing a portion having a higher crosslinking density in the surface layer of the particulate dried product (hereinafter, also referred to as a "water-absorbent resin precursor") obtained through the above-described steps. The cooling step is a step of cooling the surface-crosslinked particulate dried product. The granulating step is a step of adjusting the particle size of the surface-crosslinked water-absorbent resin.

Hereinafter, a preferred embodiment in which the water-absorbent resin derived from the mixture is recovered in the fine powder recovery step will be described.

The fine powder recovery step refers to a step of recovering (mixing) the fine powder and/or a water additive thereof contained in the water-absorbent resin derived from the mixture in any step (preferably, a step before the drying step) of the general production steps of the water-absorbent resin. In one embodiment, the fine powder contained in the water-absorbent resin derived from the mixture can be recovered as it is or after hydration or granulation in any step of a general production process of a water-absorbent resin (preferably a step before a drying step, more preferably a step of preparing an aqueous monomer solution, a polymerization step, a hydrogel-grinding step, or a drying step, and particularly preferably a polymerization step, a hydrogel-grinding step, or a drying step).

Here, the "fine powder contained in the water-absorbent resin derived from the mixture" means particles having a particle size of less than 150 $\mu$m and contained in an amount of 70 mass% or more based on the total mass of the water-absorbent resin derived from the mixture.

As a form of "recovery" of the fine powder contained in the water-absorbent resin derived from the mixture, there is a form of recovering the fine powder as it is and a form of recovering the fine powder as a granulated product thereof. The granulated product may be recovered in a state of being swollen and gelled with an appropriate amount of water.

In one embodiment, depending on the step of recovering the fine powder or the granulated product thereof contained in the water-absorbent resin derived from the mixture, an additive may be mixed together with the fine powder or the granulated product thereof. The additive is not particularly limited as long as it is used in the production of a water-absorbent resin, and examples thereof include water, a crosslinking agent, a binder other than water (for example, a water-soluble polymer, and a thermoplastic resin), a polymerization initiator, a reducing agent, a chelating agent, a coloring inhibitor, and inorganic fine particles. For example, when water is added, the amount of water added is preferably 1 mass% or more and 1000 mass% or less based on the total mass (when the total mass is 100 mass%) of water and the solid content of the fine powder (the solid content of the granulated product when the fine powder is recovered as the granulated product, the same applies hereinafter). In addition, in the case where an additive other than water is added, the amount of the additive added is preferably 0.01 mass% or more and 10 mass% or less based on the total mass of the additive other than water and the solid content of the fine powder (when the total mass is 100 mass%).

It should be noted that methods for recovering fine powder in the step of preparing an aqueous monomer solution are disclosed in WO 92/001008, WO 92/020723, and the like. In addition, methods for recovering fine powder in the polymerization step are disclosed in WO 2007/074167, WO 2009/109563, WO 2009/153196, WO 2010/006937, and the like. Further, a method for recovering fine powder in the drying step is disclosed in US 6228930 and the like.

The amount of the fine powder or the granulated product thereof contained in the water-absorbent resin derived from the mixture to be recovered is appropriately adjusted depending on the step of recovering the fine powder or the granulated product thereof.

In one embodiment, when the fine powder or the granulated product thereof is recovered in the step of preparing the aqueous monomer solution, the fine powder or the granulated product thereof is recovered in an amount of preferably 30 mass% or less, more preferably 28 mass% or less, still more preferably 20 mass% or less, particularly preferably 15 mass% or less, and most preferably 10 mass% or less, based on the total mass of the solid content of the monomer and the solid content of the fine powder (or the granulated product thereof) (when the total mass is 100 mass%). In this case, the lower limit of the recovery amount is, for example, 1 mass% or more. By recovering the fine powder or the granulated product thereof within the above range of the recovery amount, a granulated product in the form of a hydrogel can be obtained. The granulated product in the form of a hydrogel is then recovered in the drying step or a step prior to the drying step (the polymerization step or the hydrogel-grinding step), and may be dried together with the hydrogel produced in the polymerization step.

In addition, by controlling the recovery amount of the fine powder or the granulated product thereof, the ratio (solid content ratio) of the primary particles of the hydrogel derived from the monomer to the fine powder or the granulated product thereof of the water-absorbent resin derived from the mixture in the water-absorbent resin to be obtained can be appropriately controlled.

Further, in another embodiment, when the fine powder or the granulated product thereof contained in the water-absorbent resin derived from the mixture is mixed with the hydrogel derived from the monomer, the fine powder or the granulated product thereof relative to the hydrogel is recovered in an amount of preferably 30 mass% or less, more preferably 28 mass% or less, still more preferably 20 mass% or less, particularly preferably 15 mass% or less, and most preferably 10 mass% or less in terms of solid content, based on the total mass of the solid content of the hydrogel and the fine powder (or the granulated product thereof) (when the total mass is 100 mass%), from the viewpoint of the water absorption performance and productivity of a water-absorbent agent (water-absorbent resin) to be obtained. In this case, the lower limit of the recovery amount is, for example, 1 mass% or more.

[3] Examples of Aspects and Embodiments of the Present Invention

The present invention includes the following aspects and embodiments.
1. A method for recovering a water-absorbent resin, the method including, in the following order:

> a crushing step of crushing a mixture in which a water-absorbent resin and a contaminant are fixed and integrated, by applying a physical force to the mixture; and
> a separation step of separating the water-absorbent resin and the contaminant from the mixture crushed in the crushing step;

2. The recovery method according to 1, in which a content of the contaminant contained in the mixture (mixture subjected to the crushing step) is less than 20 mass% based on the total mass of the mixture;
3. The recovery method according to 1 or 2, in which a moisture content rate of the mixture (mixture subjected to the crushing step) is 20 mass% or less;
4. The recovery method according to any of 1 to 3, in which a water-soluble content of the mixture (mixture subjected to the crushing step) is 0.5 mass% or more;
5. The recovery method according to any of 1 to 4, in which the crushing step is performed using one type or two or more types of apparatuses selected from the group consisting of a pin mill, a cyclone mill, a roll mill, a roller mill, a hammer mill, a rod mill, a ball mill, a jet mill, and a bead mill;
6. The recovery method according to any of 1 to 5, in which the separation step is performed using a sieve classification apparatus and/or a dry classification apparatus;
7. The recovery method according to any of 1 to 6, in which the separation step is in any of the following modes:

> (i) including at least one or more separation steps by a sieve classification apparatus and at least one or more separation steps by an air flow classifier in any order;
> (ii) including at least two or more separation steps by the sieve classification apparatus; and
> (iii) including at least two or more separation steps by the air flow classifier;

8. The recovery method according to 7, in which the separation step by the air flow classifier is a separation step by a cyclone centrifugal separator;
9. The recovery method according to any of 1 to 8, in which the recovery method satisfies any of:

(I) the moisture content rate of the mixture after the crushing to be subjected to the separation step is 10 mass% or less, and the particle size of the mixture after the crushing to be subjected to the separation step is less than 150 μm;

(II) the moisture content rate of the mixture after the crushing to be subjected to the separation step is 8 mass% or less, and the particle size of the mixture after the crushing to be subjected to the separation step is less than 300 μm; and

(III) the moisture content rate of the mixture after the crushing to be subjected to the separation step is 5 mass% or less, and the particle size of the mixture after the crushing to be subjected to the separation step is less than 500 μm;

10. The recovery method according to any of 1 to 9, in which the contaminant includes pulp;

11. The recovery method according to any of 1 to 10, in which the mixture (mixture subjected to the crushing step) is obtained through a pre-treatment step of separating the water-absorbent resin and the contaminant contained in a water-containing absorbent article; and

12. The recovery method according to any of 1 to 10, in which the mixture (mixture subjected to the crushing step) is obtained by using an absorbent article that has absorbed moisture to recover the water-absorbent resin.

Examples

The effects of the present invention will be described with reference to the following examples and comparative examples. However, the technical scope of the present invention is not limited to examples, and examples obtained by appropriately combining the technical means disclosed in each Example are also included in the scope of the present invention. It should be noted that, in the following examples, operations were performed at room temperature (25°C), unless otherwise specified. Unless otherwise specified, "%" and "part(s)" mean "mass%" and "part(s) by mass", respectively. Further, unless otherwise specified, operations and measurements of physical properties and the like are performed under conditions of room temperature (20°C or more and 25°C or less)/relative humidity of 40% RH or more and 65% RH or less.

[Production Example 1] Production of Dried Water-Absorbent Resin Model Containing Contaminants 1

A commercially available disposable diaper was disassembled to obtain a mixture of pulp and a water-absorbent resin, and then the mixture was dried for 3 hours in a reduced-pressure dryer (internal temperature: 90°C) to obtain a dried product. Thereafter, the dried product was classified with a JIS standard sieve with an opening of 2 mm to remove the water-absorbent resins from the mixture, thereby obtaining pulp (production of model pulp).

Subsequently, 5 parts by mass of the pulp obtained by the above operation were added to 1500 parts by mass of ion-exchanged water, and stirred with a propeller blade for 1 hour to obtain a pulp dispersion. This pulp dispersion was added to 95 parts by mass of a water-absorbent resin (A) (polyacrylic acid (salt)-based resin, absorption capacity (CRC) of 50 g/g, water-soluble content of 25 mass%), which had been separately produced, using a Lödige mixer (manufactured by MATSUBO Corporation), thereby obtaining a hydrogel (swollen body of the water-absorbent resin) (G1) containing pulp.

The hydrogel (G1) containing pulp obtained by the above operation was dried for 3 hours in a dryer (internal temperature: 150°C) to obtain a dried water-absorbent resin (S1) containing pulp as an integrated mixture according to the present invention. The dried water-absorbent resin (S1) had a moisture content rate of 10 mass% and a water-soluble content of 23 mass%. The value of the moisture content rate and the value of the water-soluble content are the same for the mixture after crushing (coarsely crushed product (C1), crushed product (1-1), pulverized product (1-1), and pulverized product (1-2)). In addition, the content of the pulp was 5 mass% based on the total mass of the dried water-absorbent resin (S1).

[Comparative Example 1]

When the dried water-absorbent resin (S1) containing pulp obtained in Production Example 1 was observed, the water-absorbent resin and the pulp were fixed and integrated as shown in FIG. 2.

Next, the dried water-absorbent resin (S1) containing pulp was coarsely crushed to an extent that allowed for handling. Specifically, it was coarsely crushed until the particle size became 4 to 5 mm using a jaw crusher (Excel Jaw Crusher, manufactured by YOSHIDA MANUFACTURING CO., LTD.) to obtain a coarsely crushed product (C1).

When the obtained coarsely crushed product (C1) was observed, the water-absorbent resins and the pulp were integrated, and the water-absorbent resins and the pulp were not in a crushed state, as in the case of the dried water-absorbent resin (S1). Further, the coarsely crushed product (C1) was subjected to sieve classification or air flow classification (cyclone classification), but the water-absorbent resins and the pulp could not be separated. Therefore, the coarse crushing operation in Comparative Example 1 does not correspond to the crushing step according to the present invention.

[Example 1-1]

(First Crushing Step)

The whole amount of the coarsely crushed product (C1) obtained in Comparative Example 1 was further crushed to an extent that allowed passing through a JIS standard sieve with an opening of 1 mm. Specifically, it was crushed with a hammer mill (atomizer, manufactured by DALTON CORPORATION) equipped with a screen with a 2-mm opening to obtain a crushed product (1-1).

(First Separation Step)

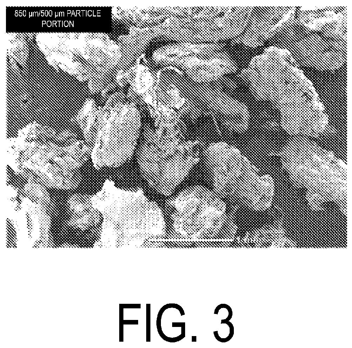

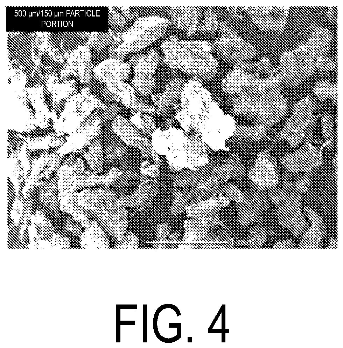

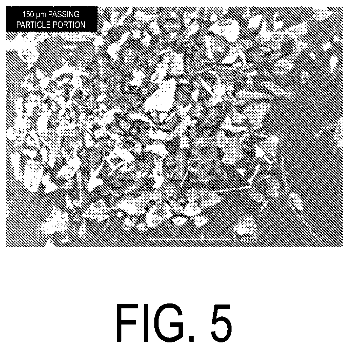

Next, the crushed product (1-1) thus obtained was classified with JIS standard sieves having openings of 850 $\mu$m, 500 $\mu$m, and 150 $\mu$m. The 850 $\mu$m/500 $\mu$m particle portion (FIG. 3), the 500 $\mu$m/150 $\mu$m particle portion (FIG. 4), and the 150 $\mu$m passing particle portion (FIG. 5) obtained by the classification were observed with an SEM (magnification: 30 times each).
As shown in FIGS. 3 and 4, the 850 $\mu$m/500 $\mu$m particle portion and the 500 $\mu$m/150 $\mu$m particle portion had the water-absorbent resin and the pulp being integrated, as in the case of the coarsely crushed product (C1). On the other hand, as shown in FIG. 5, in the 150 $\mu$m passing particle portion, the integrated product of the water-absorbent resin and the pulp was hardly observed, and the water-absorbent resin and the pulp were each present in a single state (independent state).

(Second Crushing Step)

The 850 $\mu$m/500 $\mu$m particle portion and the 500 $\mu$m/150 $\mu$m particle portion (i.e., the particle portion that could not pass through the sieve having an opening of 150 $\mu$m) obtained by the above operation were further pulverized using the hammer mill used in the first crushing step until the particle portion passed through the sieve having an opening of 150 $\mu$m.

(Second Separation Step)

Thereafter, the 150 $\mu$m passing particle portion obtained in the first separation step and the 150 $\mu$m passing particle portion obtained in the second crushing step were mixed to obtain a pulverized product (1-1). The pulp was removed from the pulverized product (1-1) using a cyclone centrifugal separator.
The cyclone centrifugal separator having a dome diameter of 600 mm was operated under the conditions of an air flow rate of 13 m$^3$/min, and a feed rate of pulp/water-absorbent resins of 1 kg/min. As a result, the recovery rate of the water-absorbent resin (1-1) derived from the mixture from the bottom of the cyclone was 94 mass%. When the water-absorbent resin (1-1) derived from the mixture from the bottom of the cyclone was observed with an SEM, almost no pulp was present, and only a single water-absorbent resin was present.

[Example 1-2]

The same operation as in Example 1-1 was performed to obtain a pulverized product (1-2) that passed through a sieve with an opening of 150 $\mu$m.
In the Second Separation Step of Example 1-1, the pulp was separated from the pulverized product (1-2) using a JIS standard sieve with an opening of 106 $\mu$m instead of using the cyclone centrifugal separator. The recovery rate of the water-absorbent resin (1-2) derived from the mixture that passed through the sieve and was recovered was 82 mass%. Further, when the water-absorbent resin (1-2) derived from the mixture was observed with an SEM, almost no pulp was present, and only a single water-absorbent resin was present.

[Production Example 2] Production of Dried Water-Absorbent Resin Model Containing Contaminants (Model of Mixture of Regenerated Water-Absorbent Resin and Contaminants) 2

A model of a used absorbent article was prepared by pouring 200 g of 0.9 mass% aqueous sodium chloride solution into a commercially available disposable diaper. It should be noted that about 10 g of the water-absorbent resins were used per disposable diaper, and the water absorption capacity (CRC) of the water-absorbent resins was 35 g/g. The ratio of the water-absorbent resin in the water-absorbent material formed of the pulp and the water-absorbent resin was about 49 mass% (ratio to the total mass of the water-absorbent material).

Next, the used absorbent article was further shredded into 2 to 3 cm, and then a large excess of water (ion-exchanged water) was added to the shredded material and stirred to obtain an aqueous dispersion formed of pulp, nonwoven fabric, a thermoplastic binder, and swollen gel particles of the water-absorbent resin.

Next, 1 g of calcium chloride was added per 100 g of the aqueous dispersion, and the mixture was treated at ordinary temperature (room temperature) for 1 hour, thereby causing the swollen gel particles of the water-absorbent resins (partially neutralized sodium polyacrylate crosslinked polymers) to shrink to a particle size of 2 mm or less. The swollen gel particles were precipitated due to the difference in specific gravity and separated from the pulp, the nonwoven fabric and the thermoplastic binder floating in water.

The nonwoven fabric and the thermoplastic binder were removed from the separated material floating in water by hand sorting, and the remaining pulp was dried in a reduced-pressure dryer at 90°C for 3 hours, and then the mass thereof was measured. As a result of subtracting the mass of the separated pulp from the mass of the pulp contained in the absorbent material of the original commercially available diaper, the ratio of the pulp contained in the precipitated swollen gel particles was calculated to be 10 mass% (the ratio to the total mass of the water-absorbent resin and the pulp in terms of the solid content contained in the gel particles).

Thereafter, the swollen gel particles shrunk and precipitated with calcium chloride were further filtered through a wire mesh to separate the swollen gel particles as a shrunk product, thereby obtaining a hydrogel (swollen body of the water-absorbent resin) (G2) containing pulp. The obtained hydrogel (G2) was dried for 40 minutes in a dryer (internal temperature: 150°C) to obtain a dried water-absorbent resin (S2) containing pulp as an integrated mixture according to the present invention. The dried water-absorbent resin (S2) had a moisture content rate of 4 mass% and a water-soluble content of 1 mass%. The value of the moisture content rate and the value of the water-soluble content are the same for the mixture after the crushing (the coarsely crushed product (C2), the crushed product (2-1), the pulverized product (2-1), and the pulverized product (2-2)). The content of the pulp was 51 mass% based on the total mass of the dried water-absorbent resin (S2).

[Comparative Example 2]

When the dried water-absorbent resin (S2) containing pulp obtained in Production Example 2 was observed, the water-absorbent resin and the pulp were fixed and integrated, and the water-absorbent resin and the pulp were not in a crushed state, as in Comparative Example 1.

Next, the dried water-absorbent resin (S2) was coarsely crushed using a jaw crusher in the same manner as in Comparative Example 1 until its particle size became 4 to 5 mm, thereby obtaining a coarsely crushed product (C2). Further, the coarsely crushed product (C2) was subjected to sieve classification or air flow classification (cyclone classification), but the coarsely crushed product (C2) had the water-absorbent resins and the pulp being integrated, and the water-absorbent resins and the pulp could not be separated. Therefore, the coarse crushing operation in Comparative Example 2 does not correspond to the crushing step according to the present invention.

[Example 2-1]

(Crushing Step)

The dried water-absorbent resin (S2) containing pulp obtained in Production Example 2 was crushed using a roll mill (roll mill, manufactured by Inokuchi Giken Limited) until the particle size became 1000 $\mu$m (1 mm) or less, to obtain a crushed product (2-1).

(Separation Step)

Next, the crushed product (2-1) was classified with JIS standard sieves with openings of 850 $\mu$m, 500 $\mu$m, 300 $\mu$m, and 150 $\mu$m, thereby obtaining an 850 $\mu$m/500 $\mu$m particle portion, a 500 $\mu$m/300 $\mu$m particle portion, a 300 $\mu$m/150 $\mu$m particle portion, and a 150 $\mu$m passing particle portion.

When each of the particle portions obtained by the classification operation was observed with an SEM, the water-absorbent resin and the pulp were integrated in the 850 $\mu$m/500 $\mu$m particle portion, but an integrated product of the water-absorbent resin and the pulp was hardly observed in the 500 $\mu$m/300 $\mu$m particle portion, the 300 $\mu$m/150 $\mu$m particle portion, and the 150 $\mu$m passing particle portion, and each was present in a single state (independent state). In particular, in the 150 $\mu$m passing particle portion, pulp was hardly present, and only the water-absorbent resin was present.

The 500 $\mu$m/300 $\mu$m particle portion, the 300 $\mu$m/150 $\mu$m particle portion, and the 150 $\mu$m passing particle portion obtained by the above operation were mixed to obtain a pulverized product (2-1). The pulp was removed from the pulverized product (2-1) using a cyclone centrifugal separator.

The cyclone centrifugal separator having a dome diameter of 600 mm was operated under the conditions of an air flow rate of 10 m$^3$/min, and a feed rate of pulp/water-absorbent resin of 1 kg/min, and as a result, the recovery rate of the water-absorbent resin (2-1) derived from the mixture from the bottom of the cyclone was 96 mass%. When the water-absorbent resin (2-1) derived from the mixture from the bottom of the cyclone was observed with an SEM, almost no pulp was present, and only a single water-absorbent resin was present.

[Example 2-2]

The same operation as in Example 2-1 was performed to obtain a pulverized product (2-2) that passed through a sieve with an opening of 500 μm.
In the Separation Step of Example 2-1, the pulp was separated from the pulverized product (2-2) using a JIS standard sieve with an opening of 425 μm instead of using a cyclone centrifugal separator. The recovery rate of the water-absorbent resin (2-2) derived from the mixture that passed through the sieve and was recovered was 86 mass%. In addition, when the water-absorbent resin (2-2) derived from the mixture was observed with an SEM, pulp was hardly present, and only a single water-absorbent resin was present.

[Production Example 3]

A hydrogel (swollen body of water-absorbent resin) (G2) containing pulp was obtained by performing the same operation as in Production Example 2. The obtained hydrogel (G2) was dried for 60 minutes in a dryer (internal temperature: 140°C) to obtain a dried water-absorbent resin (S3) containing pulp as an integrated mixture according to the present invention. The dried water-absorbent resin (S3) had a moisture content rate of 7 mass% and a water-soluble content of 1 mass%. The value of the moisture content rate and the value of the water-soluble content are the same for the mixture after the crushing (the coarsely crushed product (C3), the crushed product (3-1), the pulverized product (3-1), and the pulverized product (3-2)).

[Comparative Example 3]

When the dried water-absorbent resin (S3) containing pulp obtained in Production Example 3 was observed, the water-absorbent resin and the pulp were fixed and integrated, and the water-absorbent resin and the pulp were not in a crushed state, as in Comparative Example 2.
Next, the dried water-absorbent resin (S3) was coarsely crushed using a jaw crusher in the same manner as in Comparative Example 2 until the particle size of the dried water-absorbent resin (S3) became 4 to 5 mm, thereby obtaining a coarsely crushed product (C3). Further, the coarsely crushed product (C3) was subjected to sieve classification or air flow classification (cyclone classification), but the coarsely crushed product (C3) had the water-absorbent resins and the pulp being integrated, and the water-absorbent resins and the pulp could not be separated. Therefore, the coarse crushing operation in Comparative Example 3 does not correspond to the crushing step according to the present invention.

[Example 3-1]

(Crushing Step)

The dried water-absorbent resin (S3) containing pulp obtained in Production Example 3 was crushed using a roll mill (manufactured by Inokuchi Giken Limited: roller mill) until the particle size became 1000 μm (1 mm) or less, to obtain a crushed product (3-1).

(Separation Step)

Next, the crushed product (3-1) was classified with JIS standard sieves with openings of 850 μm and 300 μm, thereby obtaining an 850 μm/300 μm particle portion and a 300 μm passing particle portion.
When each of the particle portions obtained by the classification operation was observed with an SEM, the integration of the water-absorbent resin and the pulp was observed in some of the 850 μm/300 μm particle portion, but the integrated product of the water-absorbent resin and the pulp was hardly observed in the 300 μm passing particle portion, and each was present in a single state (independent state).
The 300 μm passing particle portion obtained by the above operation was mixed to obtain a pulverized product (3-1). The pulp was removed from the pulverized product (3-1) using a cyclone centrifugal separator.
The cyclone centrifugal separator having a dome diameter of 600 mm was operated under the conditions of an air flow rate of 10 m$^3$/min, and a feed rate of pulp/water-absorbent resin of 1 kg/min, and as a result, the recovery rate of the water-absorbent resin (3-1) derived from the mixture from the bottom of the cyclone was 95 mass%. When the water-absorbent resin (3-1) derived from the mixture from the bottom of the cyclone was observed with an SEM, almost no pulp was present, and only a single water-absorbent resin was present.

[Example 3-2]

The same operation as in Example 3-1 was performed to obtain a pulverized product (3-2) that passed through a sieve with an opening of 300 μm.
In the Separation Step of Example 3-1, the pulp was separated from the pulverized product (3-2) using a JIS standard sieve with an opening of 250 μm instead of using a cyclone centrifugal separator. The recovery rate of the water-absorbent resin (3-2) derived from the mixture that passed through the sieve and was recovered was 83 mass%. In addition, when the water-absorbent resin (3-2) derived from the mixture was observed with an SEM, pulp was hardly present, and only a single water-absorbent resin was present.

[Production Example 4]

A dried water-absorbent resin (S4) containing pulp was obtained by performing the same operation as in Production Example 1 except that the drying time of the hydrogel (G1) containing pulp in the dryer (internal temperature: 150°C) was shortened to 2 hours. The dried water-absorbent resin (S4) had a moisture content rate of 15 mass% and a water-soluble content of 22 mass%. The value of the moisture content rate and the value of the water-soluble content are the same for the mixture after the crushing (the crushed product (1-3) and the pulverized product (1-3)).

[Example 1-3]

The dried water-absorbent resin (S4) containing pulp obtained in Production Example 4 was subjected to the same operation as in First Crushing Step of Example 1-1 to obtain a crushed product (1-3). Next, the same operations as in First Separation Step and Second Crushing Step of Example 1-1 were performed to obtain a pulverized product (1-3) that passed through a sieve with an opening of 150 μm. The pulverized product (1-3) was subjected to the same operation as in Second Separation Step of Example 1-1, and the pulp was separated from the pulverized product (1-3) using a cyclone centrifugal separator. The recovery rate of the water-absorbent resin (1-3) derived from the recovered mixture was 92 mass%. In addition, when the water-absorbent resin (1-3) derived from the mixture was observed with an SEM, a slight amount of pulp was found to be mixed, but almost only the water-absorbent resin was present.

[Production Example 5]

A dried water-absorbent resin (S5) containing pulp was obtained by performing the same operation as in Production Example 2 except that the drying time of the hydrogel (G2) containing pulp in the dryer (internal temperature: 150°C) was shortened to 30 minutes. The dried water-absorbent resin (S5) had a moisture content rate of 10 mass% and a water-soluble content of 1 mass%. The value of the moisture content rate and the value of the water-soluble content are the same for the mixture after the crushing (the crushed product (2-3) and the pulverized product (2-3)).

[Example 2-3]

The dried water-absorbent resin (S5) containing pulp obtained in Production Example 5 was subjected to the same operation as in Crushing Step of Example 2-1 to obtain a crushed product (2-3). Next, the same operation as the sieve classification in Separation step of Example 2-1 was performed to obtain a pulverized product (2-3) that passed through a sieve with an opening of 500 μm. The pulverized product (2-3) was subjected to the same operation as the separation using a cyclone centrifugal separator in Separation Step of Example 2-1, and the pulp was separated from the pulverized product (2-3). The recovery rate of the water-absorbent resin (2-3) derived from the recovered mixture was 91 mass%. In addition, when the water-absorbent resin (2-3) derived from the mixture was observed with an SEM, a slight amount of pulp was found to be mixed, but almost only the water-absorbent resin was present.

[Production Example 6]

A dried water-absorbent resin (S6) containing pulp was obtained by performing the same operation as in Production Example 3 except that the drying time of the hydrogel (G2) containing pulp in the dryer (internal temperature: 140°C) was shortened to 45 minutes. The dried water-absorbent resin (S6) had a moisture content rate of 11 mass% and a water-soluble content of 1 mass%. The value of the moisture content rate and the value of the water-soluble content are the same for the mixture after the crushing (the crushed product (3-3) and the pulverized product (3-3)).

[Example 3-3]

The dried water-absorbent resin (S6) containing pulp obtained in Production Example 6 was subjected to the same operation as in Crushing Step of Example 3-1 to obtain a crushed product (3-3). Next, the same operation as the sieve classification in Separation step of Example 3-1 was performed to obtain a pulverized product (3-3) that passed through a sieve with an opening of 300 μm. The pulverized product (3-3) was subjected to the same operation as the separation using a cyclone centrifugal separator in Separation Step of Example 3-1, and the pulp was separated from the pulverized product (3-3). The recovery rate of the water-absorbent resin (3-3) derived from the recovered mixture was 94 mass%. In addition, when the water-absorbent resin (3-3) derived from the mixture was observed with an SEM, a slight amount of pulp was found to be mixed, but almost only the water-absorbent resin was present.

The following Tables 1 to 4 show the conditions and physical properties in the above Production Examples, Examples, and Comparative Examples.

[Table 1]

Table 1

| | | Production Example 1 | Production Example 4 | Production Example 2 | Production Example 5 | Production Example 3 | Production Example 6 |
|---|---|---|---|---|---|---|---|
| Mixture | Contaminants | Pulp (Taken out from commercially available disposable diaper) | | Pulp (Commercially available disposable diaper) | | Pulp (Commercially available disposable diaper) | |
| | Water-absorbent resin | Water-absorbent resin (A) (Separately Produced) | | Water-absorbent resin (Commercially available disposable diaper) | | Water-absorbent resin (Commercially available disposable diaper) | |
| | Content of contaminant (mass%) | 5 | | 51 | | 51 | |
| Hydrogel | Product Name | G1 | | G2 | | G2 | |
| | Additive water | Ion-exchanged water | | Ion-exchanged water | | Ion-exchanged water | |
| Gel shrinking conditions | Shrinking agent | - | | Calcium chloride | | Calcium chloride | |
| | Amount of shrinking agent (mass%/aqueous dispersion) | - | | 1 | | 1 | |
| Fractionation | Separation conditions | - | | Specific gravity separation → filtration | | Specific gravity separation → filtration | |
| Drying | Dried water-absorbent resin | S1 | S4 | S2 | S5 | S3 | S6 |
| | Drying conditions | 150°C × 3 hours | 150°C × 2 hours | 150°C × 40 minutes | 150°C × 30 minutes | 140°C × 60 minutes | 140°C × 45 minutes |
| | Moisture content rate (mass%) | 10 | 15 | 4 | 10 | 7 | 11 |
| | Water-soluble content (mass%) | 23 | 22 | 1 | 1 | 1 | 1 |

[Table 2]

Table 2

| | | Comparative Example 1 | Example 1-1 | Example 1-2 | Example 1-3 |
|---|---|---|---|---|---|
| Crushing step | Treatment method | Jaw crusher | Hammer mill | Hammer mill | Hammer mill |
| | Particle size | 4 to 5 mm | Less than 150 $\mu$m | Less than 150 $\mu$m | Less than 150 $\mu$m |
| Crushed/pulverized product | Product Name | Coarse crushed product C1 | Pulverized product 1-1 | Pulverized product 1-2 | Pulverized product 1-3 |
| | Pulp content (mass%) | 5 | 5 | 5 | 5 |
| | Moisture content rate (mass%) | 10 | 10 | 10 | 15 |
| Separation step | Treatment method | Sieve classification ↓ Cyclone classification | 150 $\mu$m sieve classification ↓ Cyclone classification | 150 $\mu$m sieve classification ↓ 106 $\mu$m sieve classification | 150 $\mu$m sieve classification ↓ Cyclone classification |
| Water-absorbent resin derived from mixture | Product Name | | 1-1 | 1-2 | 1-3 |
| | Recovery rate of water-absorbent resin (mass%) | Pulp cannot be separated | 94 | 82 | 92 |
| | Pulp separability | | With almost no pulp | With almost no pulp | With pulp slightly |

[Table 3]

Table 3

| | | Comparative Example 2 | Example 2-1 | Example 2-2 | Example 2-3 |
|---|---|---|---|---|---|
| Crushing step | Treatment method | Jaw crusher | Roll mill | Roll mill | Roll mill |
| | Particle size | 4 to 5 mm | Less than 500 $\mu$m | Less than 500 $\mu$m | Less than 500 $\mu$m |
| Crushed/pulverized product | Product Name | Coarse crushed product C2 | Pulverized product 2-1 | Pulverized product 2-2 | Pulverized product 2-3 |
| | Pulp content (mass%) | 10 | 10 | 10 | 10 |
| | Moisture content rate (mass%) | 4 | 4 | 4 | 10 |
| Separation step | Treatment method | Sieve classification ↓ Cyclone classification | 500 $\mu$m sieve classification ↓ Cyclone classification | 500 $\mu$m sieve classification ↓ 425 $\mu$m sieve classification | 500 $\mu$m sieve classification ↓ Cyclone classification |

(continued)

|  |  | Comparative Example 2 | Example 2-1 | Example 2-2 | Example 2-3 |
|---|---|---|---|---|---|
| Water-absorbent resin derived from mixture | Product Name | Pulp cannot be separated | 2-1 | 2-2 | 2-3 |
|  | Recovery rate of water-absorbent resin (mass%) |  | 96 | 86 | 91 |
|  | Pulp separability |  | With almost no pulp | With almost no pulp | With pulp slightly |

[Table 4]

Table 4

|  |  | Comparative Example 3 | Example 3-1 | Example 3-2 | Example 3-3 |
|---|---|---|---|---|---|
| Crushing step | Treatment method | Jaw crusher | Roll mill | Roll mill | Roll mill |
|  | Particle size | 4 to 5 mm | Less than 300 $\mu$m | Less than 300 $\mu$m | Less than 300 $\mu$m |
| Crushed/pulverized product | Product Name | Coarse crushed product C3 | Pulverized product 3-1 | Pulverized product 3-2 | Pulverized product 3-3 |
|  | Pulp content (mass%) | 10 | 10 | 10 | 10 |
|  | Moisture content rate (mass%) | 7 | 7 | 7 | 11 |
| Separation step | Treatment method | Sieve classification ↓ Cyclone classification | 300 $\mu$m sieve classification ↓ Cyclone classification | 300 $\mu$m sieve classification ↓ 250 $\mu$m sieve classification | 300 $\mu$m sieve classification ↓ Cyclone classification |
| Water-absorbent resin derived from mixture | Product Name | Pulp cannot be separated | 3-1 | 3-2 | 3-3 |
|  | Recovery rate of water-absorbent resin (mass%) |  | 95 | 83 | 94 |
|  | Pulp separability |  | With almost no pulp | With almost no pulp | With pulp slightly |

<Discussion 1>

The results of Comparative Examples 1 to 3 and Examples 1-1, 1-2, 2-1, 2-2, 3-1, and 3-2 in Tables 2 to 4 above show that the water-absorbent resin derived from the mixture recovered through the crushing step and the separation step according to the present invention hardly contains pulp which is a foreign substance (contaminant). Therefore, the recovery method according to the present invention is excellent in pulp separability (a water-absorbent resin derived from a mixture in which the amount of contaminants mixed is further reduced can be obtained). Furthermore, the comparison of Examples 1-1 and 1-2, Examples 2-1 and 2-2, and Examples 3-1 and 3-2 shows that, compared to the case where the separation step is performed only by a sieve, the combination of the separation by a sieve classification apparatus and the

29

separation by an air flow classifier (cyclone centrifugal separator) can further improve the recovery rate of the water-absorbent resin which is the target substance to be recovered while maintaining the good separability of the pulp, which is a foreign substance.

<Discussion 2>

The comparison of Examples 1-1 and 1-3, Examples 2-1 and 2-3, and Examples 3-1 and 3-3 in Tables 2 to 4 shows that when the moisture content rate of the pulverized product (the mixture after crushing to be subjected to the separation step) is decreased, the separability of the pulp as a foreign substance (contaminant) tends to be further improved while the recovery rate of the water-absorbent resin hardly changes. Thus, the separability of pulp can be further improved by adjusting the moisture content rate of the mixture after crushing to be subjected to the separation step to be low. Further, it can be said that by adjusting the moisture content rate of the mixture after crushing to be low, the pulp separability and the recovery rate of the water-absorbent resin can be made favorable.

<Reference Example 1> Production Example of Water-Absorbent Resin

Into a reaction vessel, 244.9 g of acrylic acid, 0.71 g (0.040 mol% with respect to acrylic acid) of polyethylene glycol diacrylate (molecular weight: 523) as an internal crosslinking agent, 1.83 g of a 1.0 mass% aqueous solution of diethylenetriamine pentaacetic acid·trisodium (DTPA·3Na), 103.7 g of a 48.5 mass% aqueous sodium hydroxide solution, and 389.0 g of deionized water were put and mixed to prepare an aqueous monomer solution (a'). Next, the aqueous monomer solution (a') was cooled with stirring. When the liquid temperature reached 40.0°C, 100.9 g of a 48.5 mass% aqueous sodium hydroxide solution adjusted to 40°C was added thereto and mixed to prepare an aqueous monomer solution (a). At this time, the temperature of the aqueous monomer solution (a) was raised to 77.9°C because of the second stage neutralization heat immediately after the preparation. Immediately after the 48.5 mass% aqueous sodium hydroxide solution was started to be mixed, precipitates were observed, but the precipitates were gradually dissolved to form a clear homogeneous solution. Next, to the aqueous monomer solution (a) in a stirred state, 12.1 g of a 4.0 mass% aqueous sodium persulfate solution was added, and immediately thereafter, the mixture was poured into a stainless tray-shaped container in an open-to-atmosphere system. The time from the start of the second stage neutralization to the pouring of the aqueous monomer solution (a) into the tray-shaped container was set to 55 seconds, a hot plate was used as the tray-shaped container, and heating was performed until the surface temperature reached 40°C. The polymerization reaction was started 70 seconds after the aqueous monomer solution (a) was poured into the tray-shaped container. In the polymerization reaction, the aqueous monomer solution (a) was expanded and foamed in all directions while generating water vapor, and was shrunk to a size slightly larger than that of the tray-shaped container. After a lapse of 3 minutes from the start of the polymerization reaction, a hydrogel-like crosslinked polymer (hereinafter referred to as "hydrogel") (R1) was taken out. It should be noted that these series of operations were performed in an open-to-atmosphere system. The hydrogel (R1) obtained in the polymerization reaction was cut into a strip shape and subjected to pulverization with a meat chopper having a die diameter of 7.5 mm, and then the hydrogel was spread on a 50-mesh wire mesh and dried with hot air at 190°C for 60 minutes. Next, the obtained dried product was pulverized using a vibration mill, and further passed through a sieve with an opening of 850 $\mu$m, to obtain a water-absorbent resin precursor (R1) in an irregularly fractured shape having a mass-average particle size (D50) of 350 $\mu$m, which remained on the sieve with an opening of 150 $\mu$m.

Per 100 parts by mass of the obtained water-absorbent resin precursor (R1), a surface crosslinking agent solution containing 0.030 parts by mass of ethylene glycol diglycidyl ether, 1.35 parts by mass of propylene glycol, and 3.15 parts by mass of deionized water was uniformly mixed, and a heat treatment was performed at 100°C for 45 minutes. Thereafter, the mixture was cooled and passed through a JIS standard sieve with an opening of 710 $\mu$m, thereby obtaining a water-absorbent resin (R1). The water-absorbent resin (R1) had a CRC of 35.9 (g/g), and an AAP 0.3 of 29.4 (g/g).

<Reference Example 2> Production Example in which Fine Powder Produced from Water-Absorbent Resin was Recovered in Fine Powder Recovery Step

A hydrogel (R2) obtained in the same manner as the hydrogel (R1) in Reference Example 1 was spread on a wire mesh, dried with hot air at 190°C for 60 minutes, the obtained dried product was pulverized using a roll mill and classified with a JIS standard sieve of 106 $\mu$m, and the product passing through the 106 $\mu$m sieve was recovered to obtain a water-absorbent resin fine powder (R2).

Next, 100 parts by mass of the water-absorbent resin fine powder (R2) was mixed with 100 parts by mass of hot water at 80 to 90°C while stirring to obtain a fine powder granulated gel (R2) (solid concentration of about 50 mass%) having a particle size of 1 to 3 mm. Separately, a hydrogel (R2) obtained in the same manner as the hydrogel (R1) in Reference Example 1 and the fine powder granulated gel (R2) were mixed so that the solid mass ratio (hydrogel:fine powder granulated gel) was 10:3, and the mixture was dried with hot air at 190°C for 30 minutes. Subsequently, the obtained dried product was pulverized using a roll mill and classified with JIS standard sieves with openings ranging from 850 to 106 $\mu$m, thereby obtaining a water-absorbent resin precursor (R2) in an irregularly fractured shape having a mass-average particle size (D50) of 380 $\mu$m. The water-absorbent resin (R2) had a CRC of 47.2 (g/g).

Per 100 parts by mass of the obtained water-absorbent resin precursor (R2), a surface crosslinking agent solution containing 0.030 parts by mass of ethylene glycol diglycidyl ether, 1.35 parts by mass of propylene glycol, and 3.15 parts by mass of deionized water was uniformly mixed, and a heat treatment was performed at 100°C for 45 minutes. Thereafter, the mixture was cooled and passed through a JIS standard sieve with an opening of 710 $\mu$m, thereby obtaining a water-absorbent resin (R2). The water-absorbent resin (R2) had a CRC of 34.5 (g/g), and an AAP 0.3 of 28.1 (g/g).

<Reference Example 3> Production Example in which Fine Powder obtained from Water-Absorbent Resin (1-1) Derived from Mixture was Recovered in Fine Powder Recovery Step

The water-absorbent resin (1-1) derived from the mixture obtained in Example 1-1 was classified with a JIS standard sieve of 106 $\mu$m, and the product passing through the 106 $\mu$m sieve was recovered to obtain a water-absorbent resin fine powder (R3) derived from the mixture. The water-absorbent resin fine powder (R3) derived from the mixture was used instead of the water-absorbent resin fine powder (R2) in Reference Example 2 to produce a fine powder granulated gel (R3) (solid concentration of about 50 mass%). Separately, a water-absorbent resin (R3) was obtained by performing the same operation except that a hydrogel (R3) obtained in the same manner as in Reference Example 2 (Reference Example 1) and the fine powder granulated gel (R3) were mixed so that the solid mass ratio (hydrogel:fine powder granulated gel) was 10:3. The water-absorbent resin (R3) had a CRC of 35.0 (g/g) and an AAP 0.3 of 28.1 (g/g), and thereby it was confirmed that the water-absorbent resin (R3) had substantially the same water absorption characteristics as the water-absorbent resin (R2) in Reference Example 2.

This application is based on Japanese Patent Application No. 2023-129711 filed on August 9, 2023, the disclosure of which is incorporated herein by reference in its entirety.

Reference Signs List

S1 Fracturing step
S2 Inactivation/dehydration treatment step
S3 Washing/disinfection step
S4 Fractionation/filtration step
S5 Acid treatment step
S6 Neutralization step
S7 Drying step
S100 Preparation step of a regenerated water-absorbent resin (pre-treatment step)
S200 Crushing step
S300 Separation step

**Claims**

1. A method for recovering a water-absorbent resin, the method comprising, in the following order:

   a crushing step of crushing a mixture in which a water-absorbent resin and a contaminant are fixed and integrated, by applying a physical force to the mixture; and
   a separation step of separating the water-absorbent resin and the contaminant from the mixture crushed in the crushing step.

2. The recovery method according to claim 1, wherein a content of the contaminant contained in the mixture is less than 20 mass% based on the total mass of the mixture.

3. The recovery method according to claim 1 or 2, wherein a moisture content rate of the mixture is 20 mass% or less.

4. The recovery method according to claim 1 or 2, wherein a water-soluble content of the mixture is 0.5 mass% or more.

5. The recovery method according to claim 1 or 2, wherein the crushing step is performed using one type or two or more types of apparatuses selected from the group consisting of a pin mill, a cyclone mill, a roll mill, a roller mill, a hammer mill, a rod mill, a ball mill, a jet mill, and a bead mill.

6. The recovery method according to claim 1 or 2, wherein the separation step is performed using a sieve classification apparatus and/or a dry classification apparatus.

7. The recovery method according to claim 1 or 2, wherein the separation step is in any one of the following modes:

   (i) comprising at least one or more separation steps by a sieve classification apparatus and at least one or more separation steps by an air flow classifier, in any order;
   (ii) comprising at least two or more separation steps by the sieve classification apparatus; and
   (iii) comprising at least two or more separation steps by the air flow classifier.

8. The recovery method according to claim 7, wherein the separation step by the air flow classifier is a separation step by a cyclone centrifugal separator.

9. The recovery method according to claim 1 or 2, wherein the recovery method satisfies any of the following:

   (I) the moisture content rate of the mixture after the crushing to be subjected to the separation step is 10 mass% or less, and the particle size of the mixture after the crushing to be subjected to the separation step is less than 150 μm;
   (II) the moisture content rate of the mixture after the crushing to be subjected to the separation step is 8 mass% or less, and the particle size of the mixture after the crushing to be subjected to the separation step is less than 300 μm; and
   (III) the moisture content rate of the mixture after the crushing to be subjected to the separation step is 5 mass% or less, and the particle size of the mixture after the crushing to be subjected to the separation step is less than 500 μm.

10. The recovery method according to claim 1 or 2, wherein the contaminant includes pulp.

11. The recovery method according to claim 1 or 2, wherein the mixture is obtained through a pre-treatment step of separating the water-absorbent resin and the contaminant contained in a water-containing absorbent article.

12. The recovery method according to claim 1 or 2, wherein the mixture is obtained by using an absorbent article that has absorbed moisture to recover the water-absorbent resin.

FIG. 1

FIG. 2

FIG. 3

FIG. 4

150 μm PASSING PARTICLE PORTION

FIG. 5

## INTERNATIONAL SEARCH REPORT

| International application No. |
| --- |
| **PCT/JP2024/028241** |

**A. CLASSIFICATION OF SUBJECT MATTER**

*B09B 3/35*(2022.01)i; *B01J 20/26*(2006.01)i; *B07B 7/08*(2006.01)i; *B07B 9/00*(2006.01)i; *C08J 3/12*(2006.01)i
FI: B09B3/35 ZAB; B07B9/00 A; B07B7/08; B01J20/26 D; C08J3/12 A

According to International Patent Classification (IPC) or to both national classification and IPC

**B. FIELDS SEARCHED**

Minimum documentation searched (classification system followed by classification symbols)

B09B3/35; B01J20/26; B07B7/08; B07B9/00; C08J3/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2022/080342 A1 (SANYO CHEMICAL INDUSTRIES, LTD.) 21 April 2022 (2022-04-21) paragraphs [0005]-[0007], [0036]-[0040], [0089] | 1-6, 9-12 |
| Y | | 7-8 |
| Y | WO 2014/162599 A1 (DAIKI CO., LTD.) 09 October 2014 (2014-10-09) paragraphs [0016]-[0018], fig. 2 | 7-8 |
| A | JP 2014-151254 A (FUKUOKA UNIV) 25 August 2014 (2014-08-25) entire text, all drawings | 1-12 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **01 October 2024** | **15 October 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/028241**

| Patent document cited in search report | | | Publication date (day/month/year) | Patent family member(s) | | | Publication date (day/month/year) |
|---|---|---|---|---|---|---|---|
| WO | 2022/080342 | A1 | 21 April 2022 | CN | 116194208 | A | |
| WO | 2014/162599 | A1 | 09 October 2014 | US | 2015/0360202 | A1 | |
| | | | | paragraphs [0029]-[0031] | | | |
| | | | | EP | 2982430 | A1 | |
| | | | | AU | 2013385542 | A1 | |
| | | | | CN | 105121005 | A | |
| | | | | HK | 1212283 | A1 | |
| | | | | SG | 11201506768S | A | |
| JP | 2014-151254 | A | 25 August 2014 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019085447 A
- JP 2021041310 A
- EP 4001354 A
- WO 92001008 A
- WO 92020723 A
- WO 2007074167 A
- WO 2009109563 A
- WO 2009153196 A
- WO 2010006937 A
- US 6228930 B
- JP 2023129711 A